# EUROPÄISCHE PATENTSCHRIFT

(11) **EP 3 131 954 B1**
(45) Veröffentlichungstag und Bekanntmachung des Hinweises auf die Patenterteilung: **27.06.2018**
(21) Anmeldenummer: 15715768.6
(22) Anmeldetag: 16.04.2015
(51) Int. Cl.: C08J 3/02, C08J 3/09, C08J 3/11, C08G 69/32, C08J 5/04, D01F 6/60, C08J 11/08, D06M 13/00, D06B 9/00, D06M 23/10

(54) **VERFAHREN ZUM VERSCHWEISSEN VON ARAMIDFASERN**
PROCESS FOR WELDING ARAMIDE FIBERS
PROCÉDÉ DE SOUDAGE DE FIBRES D'ARAMIDE

(30) Priorität: 16.04.2014 EP 14164901
(43) Veröffentlichungstag der Anmeldung: 22.02.2017
(73) Patentinhaber: proionic GmbH, 8074 Grambach (AT)
(72) Erfinder: KALB, Roland, A-8261 Sinabelkirchen (AT); SCHMIDT, Burghardt, CH-4143 Dornach (CH)
(74) Vertreter: Schwarz & Partner Patentanwälte OG
(86) Internationale Anmeldenummer: PCT/EP2015/058337
(87) Internationale Veröffentlichungsnummer: WO 2015/158866

(56) Entgegenhaltungen:
- Luke M. Haverhals, Matthew P. Foley, E. Kate Brown, Douglas M. Fox, Hugh C. De Long, and Paul C. Trulove: "Natural Fiber Welding: Ionic Liquid Facilitated Biopolymer Mobilization and Reorganization", , 18. Dezember 2012 (2012-12-18), XP002727326, Gefunden im Internet: URL:http://pubs.acs.org/doi/pdf/10.1021/bk -2012-1117.ch006 [gefunden am 2014-07-17]

## Beschreibung

Die vorliegende Erfindung betrifft ein Verfahren zum Verschweißen von Aramid / Amidfasern, verschweißte Aramidfasern sowie Formkörper aus verschweißten Aramidfasern.

Als Aramide (aromatische Polyamide, Polyaramide) werden nach einer Definition der USamerikanischen Federal Trade Commission und der DIN 60001 langkettige synthetische Polyamide bezeichnet, bei denen mindestens 85 % der Amidgruppen direkt an zwei aromatische Ringe gebunden sind. Zwei Aramidpolymere können über Wasserstoffbrückenbindungen gebunden sein und z.B. die folgenden Strukturmerkmale aufweisen:

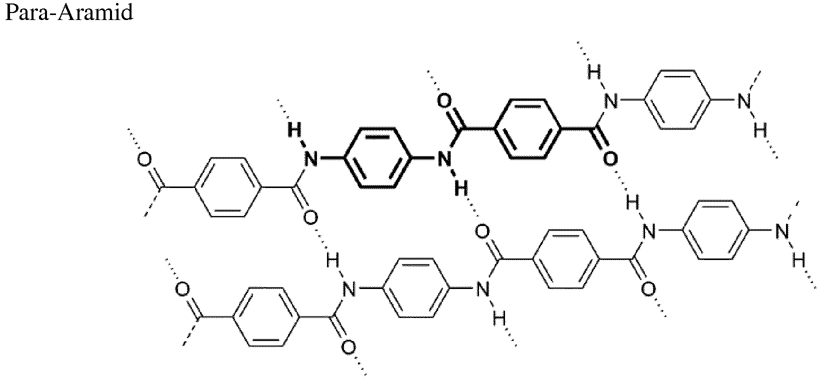

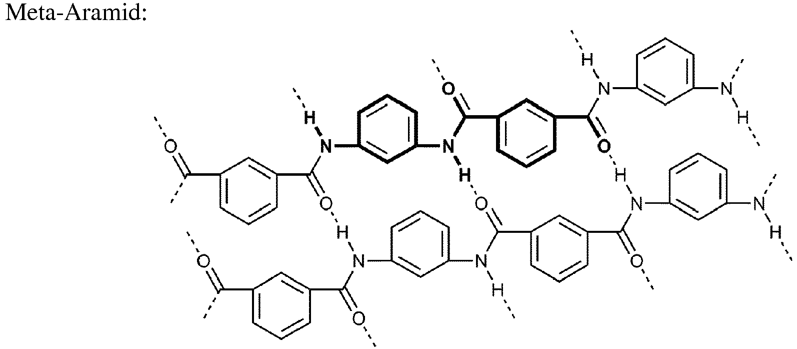

Aramid wird hauptsächlich als Faser und seltener als Folie hergestellt. Aramidfasern sind goldgelbe organische Kunstfasern. Die Fasern wurden 1965 von Stephanie Kwolek bei DuPont entwickelt und unter dem Markennamen *Kevlar*® zur Marktreife gebracht.

Aramidfasern zeichnen sich durch sehr hohe Festigkeit, hohe Schlagzähigkeit, hohe Bruchdehnung, gute Schwingungsdämpfung sowie Beständigkeit gegenüber Säuren und Laugen aus. Sie sind darüber hinaus sehr hitze- und feuerbeständig. Aramidfasern schmelzen bei hohen Temperaturen nicht, sondern beginnen ab etwa 400 °C zu verkohlen.

Bekannte Markennamen für Aramidfasern sind *Nomex*® und *Kevlar*® von DuPont, oder *Teijinconex*®, *Twaron*® und *Technora*® von Teijin. Man unterscheidet zwischen meta-Aramiden (*Nomex®* und *Teijinconex*®), para-Aramiden (*Twaron*® und *Kevlar*®) und para-Aramid-Copolymeren (*Technora*®).

Para-Aramide werden auch als Poly-p-phenylenterephthalamide (PPTA) bezeichnet, meta-Aramide als Poly-m-phenylenisophthalamide (PMIA); weitere chemische Strukturen und Markennamen sind auch unter den CAS Nummern 308082-87-3, 308069-66-1, 308069-57-0, 308069-56-9, 89107-41-5, 63428-84-2 und 24938-60-1 zu finden.

Das para-Aramid-Copolymer *Technora*® ist ein Copolyterephthalamid mit Paraphenylendiamin und 4,4'-Diaminodiphenylether. Es hat z.B. die folgenden Strukturmerkmale:

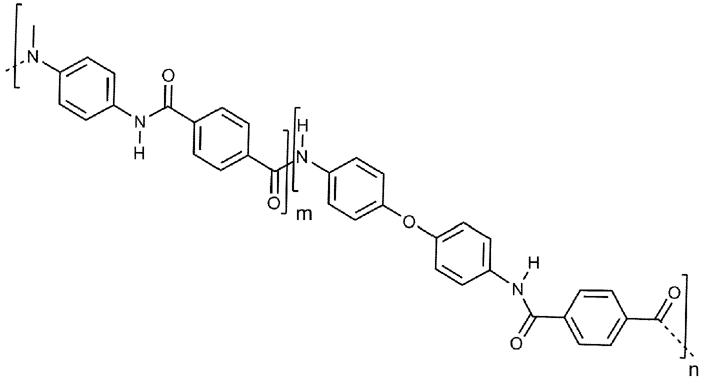

Zur Herstellung der Aramide wird im allgemeinen von aromatischen Dicarbonsäurehalogeniden und aromatischen Diaminen ausgegangen, wie z. B. Paraphenylendiamin (PPD) und Terephthaloyldichlorid (TDC): 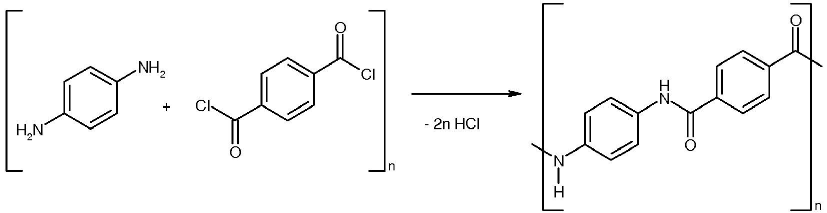 Das Polymer wird durch Reaktion beider Monomere in einem Lösungsmittel gebildet. Als Lösungsmittel kommt Hexamethylphosphorsäuretriamid in Frage, das jedoch wegen karzinogener Wirkungen besser vermieden werden sollte, was beispielsweise durch die Durchführung der Polymerisation in einer Aufschlämmung von CaCl₂ im Überschuss in dem Lösungsmittel N-Methylpyrrolidon gelingt.

Die Verarbeitung von Aramid zu Fasern erfolgt im allgemeinen aus Lösungen, da sich der Weg des Direktspinnens aus der Polymerlösung als nicht praktikabel erwiesen hat und da der Schmelzpunkt meist weit über dem thermischen Zersetzungspunkt liegt. Eine hohe Polymerkonzentration in der Spinnlösung ist dabei vorteilhaft für die Filamentherstellung und kann zu hohen Orientierungen führen.

Ein gutes Lösungsmittel für Aramide in hoher Konzentration und damit anisotropem Charakter ist konzentrierte Schwefelsäure. Mögliche Wege zur Herstellung von Aramidfasern über Polymerisation und den Gebrauch von Schwefelsäure als Lösungsmittel oder Direktverspinnen sind bekannt (Aramidprozess, Melliand Textilberichte 1982, von Blumberg/Hillermeier). Der Spinnprozess kann der übliche klassische Nassspinnprozess sein. Die Verwendung eines Luftspalts zwischen Spinndüsen und Spinnbad, wie es u. a. vom Acryl-Spinnen her bekannt ist, hat Vorteile. Nach dem Trocknen hat das Garn im allgemeinen eine hohe Festigkeit und einen hohen Elastizitätsmodul. In einer zweiten Prozessstufe kann das Garn noch verstreckt werden, z.B. bei Temperaturen von 300-400 °C. Dies führt zu einem noch höheren Modul bei gleicher Festigkeit und geringerer Bruchdehnung.

Weiters wurden im Stand der Technik auch ionische Flüssigkeiten als Lösungsmittel für Aramide z.B. während der Synthese (z.B. WO 2011/004138 A1, WO 2009/101032 A1) sowie für das Verspinnen von Compositefasern (US 2011/250162 A1) beschrieben. Dies erweißt sich als vorteilhaft, da Polyaramide in nahezu keinem anderem Lösungsmittel löslich sind, mit Ausnahme von konzentrierter Schwefelsäure (stark ätzend und verkohlend), Hexamethylphosphorsäuretriamid (stark krebserregend) oder Suspensionen von Calciumchlorid in N-Methylpyrrolidon (giftig, teratogen, schlecht handhabbar). Andere hochpolare Lösungsmittel wie DMSO und DMF können Aramidpolymere lediglich anquellen, nicht auflösen.

Die Fasern haben, ähnlich wie Kohlenstofffasern, einen negativen Wärmeausdehnungskoeffizienten in Faserrichtung, werden also bei Erwärmung kürzer und dicker. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber kohlenstofffaserverstärkten Kunststoffen ist die Druckfestigkeit von Aramidfaser-Verbundwerkstoffen deutlich geringer; die Schlagzähigkeit aber wesentlich höher. Aramide sind überaus hitzebeständig, sie überstehen problemlos Temperaturen über 370°C, ohne zu schmelzen und sind stark hitzeresistent.

Man differenziert zwischen zwei Modifikationen, die sich insbesondere durch ihren unterschiedlichen Elastizitätsmodul unterscheiden:
"Low Modulus" / "Niedermodul" (NM) und "High Modulus" / "Hochmodul" (HM).

Typische Eigenschaften von Aramidfasern sind in der nachfolgenden Tabelle 1 angegeben:

**Tabelle 1**

| | **Niedermodul (NM)** | **Hochmodul (HM)** |
|---|---|---|
| Dichte in g·cm⁻³ bei 20 °C | 1,44 | 1,45 |
| Filamentdurchmesser in µm | ≈ 12 | ≈ 12 |
| Zugfestigkeit in MPa (N·mm⁻²) | 2800 | 2900 |
| Zug-E-Modul in GPa | 59 | 127 |
| Bruchdehnung in % | 4 | 1,9 |
| Therm. Ausdehnungskoeffizient in 10⁻¹⁰.K⁻¹ | -2,3 | -4,1 |
| Wärmeleitfähigkeit in Wärmeleitfähigkeit in W·m⁻¹·K⁻¹ | 0,04 | 0,04 |
| Zersetzungstemperatur in °C | 550 | 550 |

Die Angaben in der Tabelle 1 stammen aus "Suter Kunststoffe: *Aramidfasern (Kevlar)* http://www.swiss-composite.ch/pdf/I-Aramid.pdf

Die Hochmodulfasern werden in erster Linie für stoß- und schlagbeanspruchte Bauteile benutzt, Niedermodulfasern für eine Vielzahl von Anwendungen, u.a. in beschusshemmenden Westen.

Aramidfolien werden oft aus Gewebe kalandriert, aber auch direkt als dünne Folien gefertigt. Sie werden als Isolierstoff u. a. in Transformatoren der Isolierstoffklasse C für Temperaturen bis 220°C, als Basismaterial für flexible Leiterplatten und als Fenstermaterial an Beschleunigern und Detektoren eingesetzt. Nomex®-Fasern werden etwa im Helikopter AgustaWestland AW101 im Verbundwerkstoff der Verkleidung nahe den Turbinenauslässen und als Textilstoff von Heißluftballons für die Schürze (Scoop) und den untersten Bereich der Hülle verwendet.

Die bekanntesten Anwendungen für Aramidfasern, z.B. para-Aramidfasern, sind im Sicherheitsbereich zu finden (Splitterschutz- und schusssichere Westen, Schutzhelme, Panzerungen für Fahrzeuge, Schnittschutzhandschuhe, Hitzeschutzbekleidung). Aramidfasern werden auch als Asbestersatz in Brems- und Kupplungsbelägen und Dichtungen sowie als Verstärkungsmaterial, z.B. für Glasfaserkabel oder Gummimaterialien (Reifen) eingesetzt. Ein weiteres Anwendungsfeld für Aramidpapiere ist zudem die Elektro-Isolation. Die Produkte können als Deckschieber, Nutisolation und Phasenisolation in Elektromotoren sowie als Lagenisolation in Transformatoren eingesetzt werden. Aramidgewebe kommen auch bei Überdachungen im Bauwesen zum Einsatz, unter anderem für Stadionüberdachungen. Sie bilden hier das Grundmaterial, das mit PVC oder PTFE beschichtet wird und so zu einer UV- und wetterfesten, teiltransparenten Membran wird. Auch bei Sportgeräten werden wegen ihrer Zähigkeit und Zugfestigkeit und ihrer geringen Masse oft Aramidfasern verwendet, so z.B. für Reepschnüre, Fangleinen bei Gleitschirmen, für Segel von Segelbooten und Surfbrettern, für Hockeyschläger oder für Tennisschläger. Bestimmte Fahrradreifen werden mit Aramideinlagen vor dem Eindringen von Glasscherben und ähnlichem geschützt. Faltreifen enthalten statt eines Drahtes oft ein Kevlargarn.

Weiterhin können Aramidfasern bzw. Aramidfaser basierende Verbundkunststoffe in der Luft- und Raumfahrt verwendet werden, z.B. in Flugzeugkabinenböden und -innenräumen, für Fahrwerksklappen, für Flügel, Flügelkästen und Steuerflächen, für Druckflaschen (z. B. Sauerstoffdruckbehälter), für Triebwerksgondeln und Triebwerks-Sicherheitsringe, in Flugzeugreifen, in Rotorblättern, in Kabelbäumen und für Luftfrachtcontainer. Bei nahezu allen modernen Strahltriebwerken kommen Aramidgewebe in der Triebwerksverkleidung vor, um im Fall eines Blade-off Events die Trümmer innerhalb des Triebwerks zu halten. Der neue Boeing 787 "Dreamliner" besteht z.B. zu 50 Gew.% und zu 80 Vol.% aus faserbewehrten High-Tech Verbundwerkstoffen, wobei ein wesentlicher Anteil aus Aramid basierenden Sandwich-Wabenkernen - sogenannten *Honeycombs* - aufgebaut ist.

In der bemannten und unbemannten Raumfahrt werden Aramidfasern vor allem als Schutz vor herumfliegendem Weltraumschrott verwendet. In Seeschiffen wird Aramid für Trennwände und für andere Innenraumstrukturen angewendet.

Aramidfasern werden auch als Bewehrungsmaterial in sogenanntem "Textilbeton" eingesetzt.

Im Automotive Bereich werden Aramidfasern u.A. in Reifen, Bremsschläuchen, als Fahrzeugschutz, in Bremsbelägen, Transmissionsriemen, Automatikgetrieben, Kraftstoffschläuchen, Luftfederbälgen, Kühlsystemen, in Turboladern und in Dichtungen eingesetzt.

Im Bereich der Erdöl- und Erdgasförderung werden Aramidfasern zur Verstärkung von Rohren und Pipelines sowie zum Schutz von Versorgungsleitungen, Kabeln, Steigleitungen, Seilen und Gurten verwendet.

In der Telekommunikation werden Aramidfasern zur optischen High-End Übertragung von Daten - als Weiterentwicklung der Glasfaser - verwendet.

Meta-Aramidfasern werden speziell für den Brandschutz eingesetzt. Sie sind in feuersicherer Bekleidung (etwa Schutzanzüge bei Feuerwehren, Rennfahrerkombinationen u. ä.) bekannt geworden.

Auch für die Membranen moderner Hochleistungslautsprecher werden häufig Aramidfasern eingesetzt.

Aramidfasern finden zudem auch in der Magierszene unter dem Namen "Invisible Kevlar Thread" als unsichtbarer Faden eine Anwendung.

Beim Umgang und der Verarbeitung muss auf die leichte Feuchtigkeitsaufnahme und die geringe UV-Beständigkeit Rücksicht genommen werden. Die ursprünglich goldgelben Fasern nehmen bei UV-Einstrahlung (Sonnenlicht) einen bronzebraunen Farbton an und verlieren bis zu 75% ihrer Festigkeit. Die Fasern können je nach Lagerung bis zu 7% Wasser aufnehmen. Fasern mit einer zu hohen Feuchtigkeit können getrocknet werden. In der Luft- und Raumfahrt ist ein Wassergehalt von unter 3% üblich. Zum Schneiden von Aramidfasern sind spezielle mikroverzahnte Schneidwerkzeuge notwendig. Auch die mechanische Bearbeitung fertiger Faserverbundbauteile kann mit hochwertigen Bearbeitungswerkzeugen oder durch Wasserstrahlschneiden erfolgen. Faserverbundteile werden in der Regel mit Epoxidharzen hergestellt. Chemische Haftvermittler sind nicht bekannt.

Aus dem Stand der Technik geht hervor, dass Polyaramidfasern- und Folien neben einer Reihe von großen technischen Vorteilen wie z.B. sehr hoher Reißfestigkeit und großer thermischer Beständigkeit auch einige Nachteile besitzen, wie etwa:
- Aramidfasern können (außer unter Umständen mit Hilfe obgenannter, problematischer Lösungsmittel) nicht recycelt werden.
- Es gibt keine chemischen Haftvermittler;
- Aramidfasern können geklebt aber nicht miteinander verschweißt werden (thermischer Zersetzungspunkt kleiner als Schmelzpunkt);

Aus diesen Nachteilen in der Handhabung von Aramidfasern oder -folien ergibt sich für Formkörper aus mehreren Aramideinheiten das Problem, dass die Verbindungsstellen der Aramideinheiten nicht die Materialeigenschaften von Aramid aufweisen können.

Beispielsweise können Aramide wegen der Reißfestigkeit in Förderbändern oder Fördergurtanlagen als Einlage im Zugträger eingesetzt werden. Da der Ringschluss des Bands über eine mechanische oder geklebte Verbindung der Aramideinheiten erfolgen muss, ergibt sich an dieser Stelle allerdings eine Schwachstelle in der Reißfestigkeit. Allgemein kann die Verbindung von Aramideinheiten als problematisch betrachtet werden, sodass Aramidfasern oft im Verbund mit weiteren unterstützenden und verbindenden Materialien verbaut werden, wobei sich für die Formkörper dadurch ein erhöhter Materialaufwand und auch ein erhöhtes Gewicht ergibt, was zum Beispiel im Flugzeugbau weitere Nachteile hervorruft.

Die Anordnung von Fasern in Geweben schafft eine gute, meist reißfeste Verbindung. Aramidgewebe haben zwar eine beschusshemmende Wirkung, aber bieten keinen Stichschutz, da die Klinge eines Messers zwischen den einzelnen Fasern durchdringen kann.

Es wurde nun überraschenderweise ein Verfahren zum Verschweißen von Aramid gefunden, mit dem beschriebene Nachteile aus dem Stand der Technik überwunden werden können. Das Verfahren zum Verschweißen von Aramidfasern ist, dadurch gekennzeichnet, dass
a) mindestens ein Bereich einer Aramidfaser mit einer ionischen Flüssigkeit behandelt wird, sodass das Aramid angelöst wird,
b) die Aramidfaser über den angelösten Bereich mit einem weiteren Aramidfaserbereich in Kontakt gebracht wird, wobei bevorzugt Druck auf den Kontaktbereich ausgeübt wird, wobei bevorzugt der weitere Aramidfaserbereich ebenfalls gemäß Schritt a) angelöst ist, und anschließend,
c) der angelöste Bereich des Aramids wieder koaguliert wird,
wobei die ionische Flüssigkeit zumindest eines der beiden folgenden Kriterien aufweist:
i) α-Wert < 0,6 und β-Wert > 0,8;
ii) Differenz aus β-Wert minus α-Wert ≥ 0,45,
wobei α-Wert und β-Wert Kamlet-Taft Solvent-Parameter sind.

"Aramid" gemäß vorliegender Erfindung schließt meta-Aramide, para-Aramide und para-Aramid-Copolymere ein.

Unter "Aramidfasern" wie in diesem Dokument verwendet, sollen neben Aramidfasern auch Aramidfolien, Aramidgewebe, Aramidwerkstücke, Aramidbeschichtungen, z.B. Lacke, verstanden werden. Gemäß dem erfindungsgemäßen Verfahren können mehrere Fasern miteinander verschweißt werden oder auch eine einzelne Aramidfaser mit sich selbst. Beispielsweise kann das Verfahren dafür genutzt werden eine einzelne Aramidfaser an ihren Enden zu verbinden, um einen Aramidfaser-Ring bereit zustellen. Dabei würde das eine Ende den angelösten ersten Bereich und das andere Ende den weiteren Aramidfaserbereich darstellen. Der Aramidfaserbereich kann sich auch über die gesamte Aramidfaser oder Folie erstrecken.

Ionische Flüssigkeiten sind - im Sinne der anerkannten Literatur (z.B. Wasserscheid, Peter; Welton, Tom (Eds.); "Ionic Liquids in Synthesis, 2nd Edition", Verlag Wiley-VCH 2008; ISBN 978-3-527-31239-9; Rogers, Robin D.; Seddon, Kenneth R. (Eds.); "Ionic Liquids - Industrial Applications to Green Chemistry", ACS Symposium Series 818, 2002; ISBN 0841237891") - flüssige organische Salze oder Salzgemische bestehend aus organischen Kationen und organischen oder anorganischen Anionen, mit Schmelzpunkten von unter 100°C. In diesen Salzen können zusätzlich anorganische Salze gelöst sein und des weiteren auch molekulare Hilfsstoffe. Im Sinne dieser Anmeldung sehen wir die willkürlich mit 100°C festgelegte Grenze des Schmelzpunktes ionischer Flüssigkeiten in weiterem Sinne und schließen somit auch solche Salzschmelzen ein, die einen Schmelzpunkt von über 100°C, aber unter 200°C haben. Ionische Flüssigkeiten weisen äußerst interessante Eigenschaften auf, wie beispielsweise im allgemeinen einen sehr geringen bis nicht messbaren Dampfdruck, einen sehr großen Liquidusbereich, gute elektrische Leitfähigkeit und ungewöhnliche Solvatations-Eigenschaften. Diese Eigenschaften prädestinieren sie für den Einsatz in verschiedenen Bereichen technischer Anwendungen. Ionische Flüssigkeiten sind beispielsweise auch zum Verschweißen von Naturfasern bekannt (Haverlas, L.M.; Foley, M.P.; Brown, E.K.; Fox, D.M.; De Long, H.C.; In Ionic Liquids; Science and Applications; 2012). Wie Tabelle 1 in Haverlas et al. zeigt, sind die Eigenschaften der Aramide in vielen Aspekten denen von Stahl ähnlicher als den Naturfasern. Es konnte daher nicht davon ausgegangen werden, dass diese Verwendung von ionischen Flüssigkeiten auf Aramide übertragbar wäre, da diese synthetischen Materialien sich in Aufbau, Konstitution und Löseverhalten von Naturfasern wie Cellulose unterscheiden.

Bei der Anwendung von ionischen Flüssigkeiten mag die Optimierung der Eigenschaften für die jeweilige Anwendung in weiten Grenzen durch eine Variation der Struktur von Anion und Kation bzw. eine Variation ihrer Kombination erfolgen, was den ionischen Flüssigkeiten übrigens ganz allgemein die Bezeichnung "Designer Solvents" (siehe beispielsweise Freemantle, M.; Chem. Eng. News, 78, 2000, 37) eingebracht hat.

Geeignete ionische Flüssigkeiten für das erfindungsgemäße Verfahren sind so gewählt, dass das Aramid angelöst wird. Dabei wird "anlösen" so verstanden, dass die Struktur nur teilweise aufgelöst wird, das heißt, der Kontakt bzw. die Interaktion zwischen einzelnen Aramidpolymerketten wird gelockert bzw. aufgebrochen. Anlösen bedeutet aber auch, dass ein Teil der Struktur der Aramideinheit erhalten bleibt. Beispielsweise bleibt der Kern einer Aramidfaser unverändert, während im Zuge des Verfahrens der oberflächliche Bereich gelöst wird. Auch das Gelieren einer Aramidfaser wird als angelöst im Sinne der Erfindung betrachtet, da dabei die wesentliche Form und die Einheit als Faser erhalten bleibt. Das vollständige Lösen der Aramidfasern, das heißt Lösen unter Verlust der gesamten Einheit fällt nicht unter den Begriff des Anlösens.

Das erfindungsgemäße Verfahren beruht auf der Erkenntnis der vorliegenden Erfindung, dass durch die geeignete Wahl des Kations, des Anions und gegebenenfalls durch Zusatzstoffe ionische Flüssigkeiten bereit gestellt werden, die gemäß vorliegender Erfindung geeignet sind, Aramide anzulösen. Diese werden hierin auch als "ionische Flüssigkeit(en) gemäß (nach) vorliegender Erfindung" bezeichnet.

Es ist davon auszugehen, dass die Wechselwirkungskräfte zwischen den einzelnen Polymerketten einer Faser während dieses Verfahrens teilweise aufgebrochen werden, in dem die ionische Flüssigkeit zwischen die Ketten eindringt. Durch die physikalische Nähe der Fasern in Schritt b) des Verfahrens, wird ermöglicht dass die Polymerketten unterschiedlicher Fasern miteinander in Kontakt kommen. Anschließend wird die Wechselwirkung zwischen den Polymerketten beispielsweise durch Entfernen der ionischen Flüssigkeit wieder hergestellt. Die Fasern koagulieren durch die geschaffene Anordnung so, dass die Polymerketten der ursprünglich getrennten Fasern in Wechselwirkung treten. Im Zuge des Schritts c) werden die Materialeigenschaften der Aramide zumindest teilweise wieder hergestellt und zwischen den einzelnen Aramidfasern, der für das Verschweißen angestrebte Form- und Kraftschluss erreicht.

Während die Schritte a) und b) des Verfahrens in der Reihenfolge a) gefolgt von b) oder auch kombiniert oder in umgekehrter Reihenfolge durchgeführt werden können, wird Schritt c) vorteilhaft anschließend an die anderen Schritte durchgeführt. Schritt a) und b) können zum Beispiel so kombiniert werden, dass Aramidfasern erst in Kontakt gebracht werden und ein Gelege bilden, dass als Gelege mit der ionischen Flüssigkeit behandelt wird. Gegebenenfalls kann es von Vorteil sein, dass einzelne Schritte wiederholt werden.

Vorteilhafterweise stellt das erfindungsgemäße Verfahren somit eine Methode zum unproblematischen Verschweißen zur Verfügung und ermöglicht das "Reshaping" von Aramidfasern durch die Schritte Anlösen, Verbinden und wieder Ausfällen. Die Koagulation des gelösten Aramids kann durch Zugabe geeigneter Antisolventien in flüssiger oder Dampfphase erfolgen oder aber auch durch Aufnahme von Luftfeuchtigkeit, da insbesondere geeignete ionische Flüssigkeiten stark hygroskopisch sein können. Alternativ kann die ionische Flüssigkeit entfernt werden durch Erhitzen. Je nach Temperatur beim Erhitzen ergeben sich zwei Mechanismen wie die ionische Flüssigkeit entfernt werden kann: a) Erhitzen über ihren thermischen Zersetzungspunkt, um sie in gasförmige Zersetzungsprodukte umzuwandeln ggf. unter anlegen von Vakuum oder b) Erhitzen unterhalb ihres thermischen Zersetzungspunkt, sofern die ionischen Flüssigkeit einen ausreichend hohen Dampfdruck besitzt um sie unter ggf. Vakuum abzudestillieren. Unter "Reshaping" soll dabei auch die Formung dreidimensionaler Werkstücke und strukturierter Gewebe verstanden werden, beispielsweise kann ein zweidimensionales AramidGewebe/Textil mit ionischer Flüssigkeit besprüht und in einer dreidimensionalen Form unter Einwirkung von Hitze und/oder Antisolvens verpresst werden.

Ionische Flüssigkeiten nach vorliegender Erfindung weisen die allgemeine Formel

[A]⁺ₐ[B]^{a-} I

worin
a die Zahl 1,2 oder 3,
[A]⁺ ein organisches Kation, und
[B]^{a-} ein Anion bedeuten,
auf.

In einer Verbindung der Formel I der vorliegenden Erfindung bedeutet [B]^{a-} ein beliebiges koordinierendes Anion mit der negativen Ladung a, die mit der Anzahl der jeweils vorhandenen Kationen a in [A]ₐ⁺ im Einklang steht.

a in [B]^{a-} bedeutet eine der Zahlen 1, 2 oder 3. Als Beispiele zweifach negativ geladener Anionen sei Carbonat genannt. Als Beispiel eines dreifach negativ geladenen Anions sei Phosphat genannt.

Geeignete ionische Flüssigkeiten sind im Sinne der vorliegenden Patentanmeldung "koordinierende" ionische Flüssigkeiten. Unter einer "koordinierenden" ionischen Flüssigkeit im Sinne der vorliegenden Patentanmeldung versteht man eine solche, welche koordinierende Anionen enthält. Koordinierende Anionen zeichnen sich dadurch aus, dass sie freie Elektronenpaare aufweisen, welche in der Lage sind, koordinative Bindungen mit Elektronenpaarakzeptoren (Lewissäuren) oder Protonendonoren (Brönstedtsäuren) einzugehen. Im Falle der Protonendonoren sind die Protonen dabei kovalent an ein, gegenüber dem Proton elektronegativeres Atom gebunden (z.B. O, N, F), die Bindung ist daher polar ("azide Protonen"), das Proton wird aber nicht abgespalten sondern geht eine zweite, koordinative Bindung mit dem koordinierenden Anion der ionischen Flüssigkeit ein (Wasserstoffbrückenbindung). Besonders gut koordinierende Anionen liegen dann vor, wenn die freien Elektronenpaare auf kleinen Heteroatomen mit hoher Ladungsdichte sitzen. Dies ist insbesondere bei Anionen mit Sauerstoffatomen der Fall, insbesondere Alkyloxide, Aryloxide, Hydroxid oder Carboxylat, oder bei Fluorid, Chlorid und Bromid.

Der Begriff "koordinierende ionische Flüssigkeit" wie im vorliegenden Dokument verwendet schließt neben koordinierenden ionischen Flüssigkeiten sowohl Mischungen verschiedener koordinierender ionischer Flüssigkeiten miteinander, als auch Mischungen koordinierenden ionischen Flüssigkeiten mit Cosolventien oder Antisolventien ein, sodass z.B. neben den Lösungsmitteln der Gruppe II und I, wie im Beispiel 3 der vorliegenden Anmeldung beschrieben, auch nicht koordinierende ionische Flüssigkeiten als Co- oder Antisolventien zugesetzt sein können.

Außerdem wurde gefunden, dass es für die Kationen bevorzugt ist, wenn diese als "quaternäre" Verbindung vorliegt. "Quaternär" ist im Sinne der vorliegenden Anmeldung so zu verstehen, dass alle Valenzen eines Stickstoff- oder Phosphoratoms stabil organisch gebunden sind, also kein einsames, nicht bindendes Elektronenpaar mehr existiert. Dies trifft auf vierfach alkylierte Ammonium- oder Phosphoniumsalze ebenso zu, wie auf in Aromaten eingegliederte Stickstoffe (Heteroaromaten) mit einem dritten Substituenten, der nicht Wasserstoff ist, beispielsweise Pyridinium Salze. Entscheidend für die erfindungsgemäße Eignung ist dabei die Eigenschaft der konstanten positiven Ladung. Diese Eigenschaft weist auch protoniertes Guanidinium auf, da der Wasserstoff eine so geringe Azidität hat, dass auch hier eine konstante positive Ladung gewährleistet ist. Für Guanidin wird in Wasser ein pKₐ-Wert von 13,6 bis 13,7 angegeben. Substituierte Guanidin-Derivate können noch basischer sein mit pKₐ-Werten über 14, welche in nicht wässrigem Medium bestimmbar sind, oder weniger basisch z.B. pKₐ∼10 für Phenylguanidin, durch den Elektronenakzeptor-Rest. Erfindungsgemäß sind protonierte Kationen eingeschlossen, bei denen der pKₐ-Wert ≥ 10, bevorzugt ≥ 13 ist. Es ist eine Erkenntnis der vorliegenden Anmeldung, dass ionische Flüssigkeiten mit deprotonierbaren Kationen ungeeignet sind zum Lösen oder Anlösen. In Beispiel 2 weisen die Vergleichsbeispiele Nr. 22-23 azide Wasserstoffe auf und unterstützen diese Erkenntnis.

Auch lässt sich aus Beispiel 2 ableiten, dass die Größe des Kations einen Einfluss darauf hat, ob eine ionische Flüssigkeit Aramide vollständig löst oder geliert/anlöst. Dies lässt sich beispielsweise durch eine geeignete Seitenkettenlänge der Alkylreste steuern. Während ein 1-Butyl-3-methylimidazoliumchlorid in Beispiel 3 die Aramidfaser vollständig löst, wird diese durch 1-Decyl-3-methylimidazoliumchlorid in Beispiel 12 nur geliert. Es wird angenommen, dass kleinere, flexible Kationen erlauben, dass auch das Kation zwischen die einzelnen Polymerketten eindringen kann. Die Notwendigkeit eines tief eindringenden Kations könnte darüber erklärt werden, dass zwischen den Aramidketten neben den Wasserstoffbrücken auch aromatische Wechselwirkungen eine Rolle spielen. Dass Vorhandensein von positiven Ladungen zwischen den Ketten, kann die rein aromatischen Wechselwirkungen durch Kation-Aromat Wechselwirkungen ersetzen und somit zum vollständigen Lösen führen. Ionische Flüssigkeiten, deren Kationen nicht so gut zwischen die Polymerketten eindringen können, weil sie größer oder sperriger sind, scheinen das Gelieren oder Anlösen zu fördern. Der Fachmann kann die Größe der Kationen an Hand der hier offenbarten Beispiele geeignet wählen.

Um die geeigneten ionischen Flüssigkeiten zum Lösen bzw. Anlösen zu identifizieren, wurden Kamlet-Taft Parameter herangezogen. Die Kamlet-Taft Solvens-Parameter beschreiben dabei die Wasserstoffbrückenbindungs-Donoreigenschaft (α), die Wasserstoffbrückenbindungs-Akzeptoreigenschaft (β) und die Dipolarität / Polarisierbarkeit (π*) des Lösungsmittels ("Solvents and Solvent Effects in Organic Chemistry"; Christian Reichardt, WILEY-VCH Verlag, Weinheim 2003, ISBN 3-527-30618-8; Kamlet, M. J.; Abboud, J. L.; Taft, R. W. J. Am. Chem. Soc. 1977, 99, 6027; Kamlet, M. J.; Taft, R. W. J. Am. Chem. Soc. 1976, 98, 377; Kamlet, M. J.; Hall, T. N.; Boykin, J.; Taft, R. W. J. Org. Chem. 1979, 44, 2599; Taft, R. W.; Kamlet, M. J. J. Am. Chem. Soc. 1976, 98, 2886). Sie können durch einen sogenannten solvatrochromen Shift gemessen werden und sind dem Fachmann wohlbekannt. So hat sich herausgestellt, dass besonders ionische Flüssigkeiten geeignet sind mit hohen β-Werten, also guten Eigenschaften als Wasserstoffbrückenbindungs-Akzeptor und niedrigen α-Werten, also schlechter Kapazität als Wasserstoffbrückenbindungs-Donor geeignet sind. In der folgenden Tabelle finden sich einige Literatur-Parameter, wobei Mehrfachangaben durch widersprüchliche Literaturangaben resultieren:

**Tabelle 2**

| **Nr.** | **Ionische Flüssigkeit^{X}** | **CAS Nr.** | **α** | **β** | **Π*** | **β-α** |
|---|---|---|---|---|---|---|
| 1 | 1-Ethyl-3-methylimidazolium-acetat² | 143314-17-4 | 0,57 | 1,06 | 0,97 | 0,49 |
| 2 | 1-Octyl-3-methylimidazolium-chlorid¹ | 64697-40-1 | 0,31 | 0,98 | 1,03 | 0,67 |
| 3 | 1-Decyl-3-methylimidazolium-chlorid¹ | 171058-18-7 | 0,31 | 0,98 | 0,97 | 0,67 |
| 4 | 1-Butyl-3-methylimidazolium-chlorid¹ | 79917-90-1 | 0,32 | 0,95 | 1,13 | 0,63 |
| 5 | 1-Butyl-3-methylimidazolium-acetat¹ | 284049-75-8 | 0,36 | 0,85 | 1,06 | 0,49 |
| | 1-Butyl-3-methylimidazolium-acetat² | 284049-75-8 | 0,57 | 1,18 | 0,89 | 0,61 |
| 6 | 1-Hexyl-3-methylimidazolium chloride² | 171058-17-6 | 0,48 | 0,94 | 1,02 | 0,46 |
| 7 | 1-Butyl-3-methylimidazolium-nitrat¹ | 179075-88-8 | 0,4 | 0,74 | 1,04 | 0,34 |
| 8 | 1-Butyl-3-methylimidazoliumtetrafluoroborat¹ | 174501-65-6 | 0,52 | 0,55 | 0,96 | 0,03 |
| | 1-Butyl-3-methylimidazoliumtetrafluoroborat ² | | 0,77 | 0,39 | 1,04 | 0,38 |
| 9 | 1-Butyl-3-methylimidazoliummethansulfonat ² | 342789-81-5 | 0,44 | 0,77 | 1,02 | 0,33 |
| | 1-Butyl-3-methylimidazoliummethansulfonat ¹ | | 0,36 | 0,85 | 1,04 | 0,49 |
| 10 | 1-Butyl-3-methylimidazoliummethylsulfat ¹ | 401788-98-5 | 0,39 | 0,75 | 1,05 | 0,36 |
| | 1-Butyl-3-methylimidazoliummethylsulfat ² | | 0,53 | 0,66 | 1,06 | 0,13 |
| 11 | 1-Butyl-3-methylimidazoliumtrifluormethansulfonat ³ | 174899-66-2 | 0,60 | 0,50 | 1,00 | -0,10 |
| 12 | 1-(2-Hydroxyethyl)-3-methylimidazolium-acetat ⁴ | 1203809-91-9 | 0,53 | 0,90 | 1,04 | 0,37 |
| 13 | 1-Butyl-3-methylimidazolium-butyrat² | 669772-78-5 | 0,51 | 1,23 | 0,92 | 0,72 |
| 14 | 1-Butyl-3-methylimidazolium-propionat² | 914497-10-2 | 0,48 | 1,16 | 0,94 | 0,68 |
| 15 | 1-Ethyl-3-methylimidazolium-nitrat⁴ | 143314-14-1 | 0,48 | 0,66 | 1,13 | 0,18 |

| | | | | | | |
|---|---|---|---|---|---|---|
| ^{x}Literaturangaben: ¹A. Schade; J. Molec. Liqu., 2014, 192, 137-143 ²R. Wilding; Phys. Chem. Phys., 2011, 13, 16831-16840 ³Electronic Supplementary Material (ESI) for Physical Chemistry Physics, The Owner Societies 2011 ⁴Shiguo Zhang, Xiujuan Qi, Xiangyuan Ma, Liujin Lu and Youquan Deng; J. Phys. Chem. B 2010, 114, 3912-3920 | | | | | | |

Die ionischen Flüssigkeiten Nr. 1 bis Nr. 6 der Tabelle 2 sind zum Lösen von meta-Aramidfasern und para-Aramid-Copolymerfasern geeignet (s. Beispiel 2). Sie weisen einen β-Wert größer 0,8 und einen α-Wert kleiner 0,6 auf. Generell können ionische Flüssigkeiten mit β-Wert größer 0,6, bevorzugt größer 0,7, noch bevorzugter größer 0,8 für erfindungsgemäße Verfahren geeignet sein. Insbesondere ist die Differenz aus β-Wert minus α-Wert für geeignete ionische Flüssigkeiten groß. Dieser Differenzwert "β-α", beschreibt die freie, verfügbare Wasserstoffbrückenbindungs-Akzeptor-Kapazität. Bevorzugte ionische Flüssigkeiten weisen eine Differenzwert "β-α" ≥ 0,3 noch bevorzugter ≥ 0,45 auf. Die ionischen Flüssigkeiten Nr. 7 und Nr. 8 aus Tabelle 2 haben jeweils einen höheren α-Wert, kleineren β-Wert oder kleineren β-αWert. In Beispiel 2 konnten diese ionischen Flüssigkeiten keine Aramidfasern anlösen. Nr. 9 bis Nr. 15 aus Tabelle 2 wurden so nicht in den Beispielen verwendet und sind als Vergleich herangezogen. Bei Nr. 9 ist davon auszugehen, dass es sich bei dem auffallend hohen β-Wert aus der Literaturstelle 1 (A. Schade, J. Molec. Liqu., 2014, 192, 137-143) möglicherweise um einen Messfehler handelt.

In einem Aspekt ist das Verfahren dadurch gekennzeichnet, die Aramidfasern ausgewählt sind aus der Gruppe umfassend meta-Aramid und para-Aramid-Copolymer.

Es hat sich gezeigt, dass meta-Aramid und para-Aramid-Copolymerfasern wie Nomex bzw. Technora durch eine breite Auswahl von geeigneten ionischen Flüssigkeiten gelöst bzw. angelöst werden können, während für para-Aramidfasern wie Kevlar die Auswahl der geeigneten ionischen Flüssigkeiten eingeschränkter ist. Die vorliegende Offenbarung und die unten angeführten Beispiele bieten ausreichend Informationen und Regeln, wie der Fachmann eine geeignete ionische Flüssigkeit für die jeweiligen Aramidfaser-Typen auswählen kann.

In einem weiteren Aspekt ist das Verfahren zum Verschweißen von Aramidfasern aus der Gruppe umfassend meta-Aramid und para-Aramid-Copolymer, dadurch gekennzeichnet, dass die ionische Flüssigkeit ein Salz umfasst,
wobei das Kation ausgewählt ist aus einem quaternären Ammonium, Phosphonium, Guanidinium, Pyridinium, Pyrimidinium, Pyridazinium, Pyrazinium, Piperidinium, Morpholinium, Piperazinium, Pyrrolium, Pyrrolidinium, Oxazolium, Thiazolium, Triazinium, Imidazolium, Triazolium, protoniertem Guanidinium
und das Anion ausgewählt ist aus
- Halogenid, ausgewählt aus der Gruppe umfassend F⁻, Cl⁻, Br⁻
- Carboxylat der allgemeinen Formel

   [Rₙ-COO]⁻ .... (Vd)

   worin Rₙ Wasserstoff, (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5- bis 6-gliedriges Aryl oder 5- bis 6-gliedriges Heteroaryl bedeutet,
- Carbonat,
- Alkylcarbonat, der allgemeinen Formel

   [Rₛ-OCOO]⁻ .... (Vf)

   worin Rₛ (C₁₋₄)Alkyl ist, insbesondere Methylcarbonat und Ethylcarbonat
- Hydroxid,
- Alkoxid oder Aryloxid, der allgemeinen Formel

   [Rₘ₋O]⁻ .... (Ve)

   worin Rₘ (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5- bis 6-gliedriges Aryl oder 5- bis 6-gliedriges Heteroaryl bedeutet,
- Phosphat PQ₄³⁻,
- Alkyl- oder Dialkylphosphat, oder Alkyl- und Dialkylphosphonat, der allgemeinen Formeln

   [Rᵤ-OPO₃]²⁻ (Vi)

   [RᵤO-PO₂-ORᵥ]⁻ (Vj)

   [Rᵤ-PO₃]²⁻ (Vk)

   oder

   [Rᵤ-PO₂-ORᵥ]⁻ (Vl),

   worin Rᵤ und Rᵥ unabhängig voneinander (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5- bis 6-gliedriges Aryl oder 5-bis 6-gliedriges Heteroaryl bedeuten.

In einem Aspekt ist das Verfahren, dadurch gekennzeichnet, dass die Aramidfasern para-Aramid sind.

In einer Ausführungsform ist ein Verfahren zum Verschweißen von Amaridfasern, wobei die Aramidfasern para-Aramid sind, dadurch gekennzeichnet, dass die ionische Flüssigkeit ein Salz umfasst,
wobei das Kation ausgewählt ist aus einem quaternären Ammonium, Phosphonium, Guanidinium, Pyridinium, Pyrimidinium, Pyridazinium, Pyrazinium, Piperidinium, Morpholinium, Piperazinium, Pyrrolium, Pyrrolidinium, Oxazolium, Thiazolium, Triazinium, Imidazolium, Triazolium, protoniertem Guanidinium und das Anion ausgewählt ist aus
- Fluorid
- Hydroxid,
- Alkoxid oder Aryloxid, der allgemeinen Formel

   [Rₘ₋O]⁻ .... (Ve)

   worin Rₘ (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5-bis 6-gliedriges Aryl oder 5- bis 6-gliedriges Heteroaryl bedeutet.

Die ionischen Flüssigkeiten, die sich im Verfahren zum Verschweißen von para-Aramid besonders geeignet erwiesen haben, zeichnen sich neben dem quarternären Kation durch Anionen aus, die als besonders koordinierend bezeichnet werden können.

Gemäß einer beispielhaften Ausführungsform gemäß vorliegender Erfindung steht [A]⁺ in der Formel I für ein Ammonium-Kation [R'₁R₁R₂R₃N]⁺, ein Phosphonium-Kation [R'₁R₁R₂R₃P]⁺, ein Sulfonium-Kation [R'₁R₁R₂S]⁺, ein heterocyclisches, z.B. heteroaromatisches Kation oder ein Guanidinium-Kation der Formel 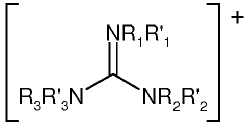 worin
R₁, R'₁, R₂, R'₂, R₃ und R'₃ unabhängig voneinander Alkyl, Alkenyl, Alkinyl, Cycloalkyl, Cycloalkenyl, Aryl oder Heteroaryl bedeuten, wobei die 7 letztgenannten Reste jeweils unabhängig voneinander unsubstituiert sind oder substituiert durch
   ein oder mehr Halogen und/oder 1 bis 3 Reste ausgewählt aus (C₁₋₆)Alkyl, Aryl, Hetroaryl, (C₃₋₇)Cycloalkyl, Halogen, OR_{c}, SR_{c}, NR_{c}R_{d}, COR_{c}, COOR_{c}, CO-NR_{c}R_{d}, worin R_{c} und R_{d} unabhängig voneinander für (C₁₋₆)Alkyl, Halo(C₁₋₆)Alkyl, Cyclopentyl, Cyclohexyl, Phenyl, Tolyl oder Benzyl stehen;
   oder
zwei der Reste R₁,R'₁,R₂,R'₂,R₃, R'₃ bilden gemeinsam mit dem Heteroatom, an welches sie gebunden sind, einen gesättigten oder ungesättigten Ring aus, der unsubstituiert oder substituiert ist, und wobei jede Kohlenstoffkette durch ein oder mehrere Heteroatome ausgewählt aus der Gruppe O, S, NH oder N(C₁₋₄)Alkyl unterbrochen sein kann.
Im Falle des Guanidinium-Kations können R₁, R'₁, R₂, R'₂, R₃ und R'₃ zusätzlich unabhängig voneinander für Wasserstoff stehen.

In der Formel I ist ein kationischer Heteroarylrest in der Bedeutung von [A]⁺ ausgewählt aus einem 5- oder 6-gliedrigen Heteroaromat, der mindestens ein Stickstoffatom sowie gegebenenfalls ein Sauerstoff- oder Schwefelatom aufweist, und der unsubstituiert oder substituiert ist, insbesondere ausgewählt aus der Gruppe der Formel 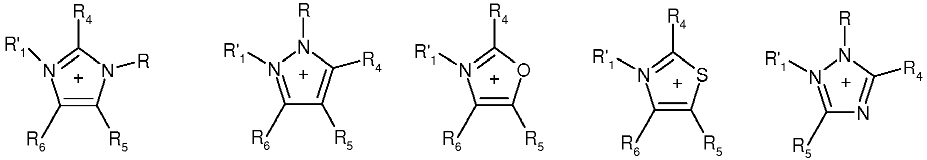 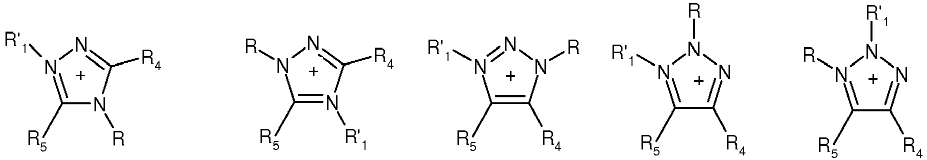 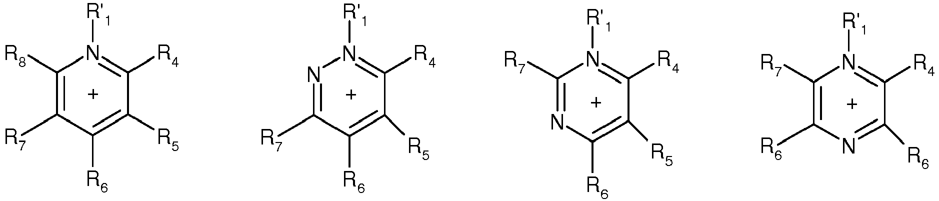 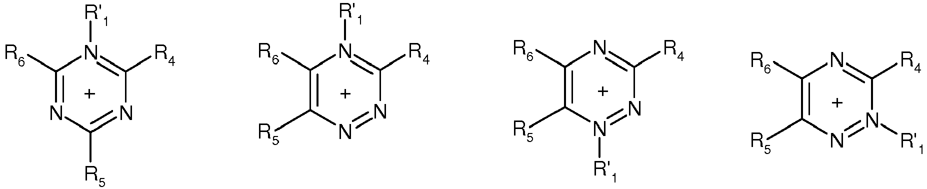 worin
R and R'₁ unabhängig voneinander (C₁₋₂₀)Alkyl, (C₃₋₁₂)Cycloalkyl, (C₂₋₂₀)Alkenyl, (C₃₋₁₂)Cycloalkenyl, Aryl oder Heteroaryl bedeuten, wobei die 6 letztgenannten Reste jeweils unabhängig voneinander unsubsutituiert sind, oder substitutiert durch
   ein oder mehrere Halogenreste, und/oder 1 bis 3 Reste ausgewählt aus der Gruppe (C₁₋₁₀)Alkyl, Aryl, Heterocyclyl, (C₃₋₇)Cycloalkyl, Halogen, OR_{c}, SR_{c}, NR_{c}R_{d}, COR_{c}, COOR_{c}, CO-NR_{c}R_{d}, worin
   R_{c} und R_{d} unabhängig voneinander für (C₁₋₆)Alkyl, Halo(C₁₋₆)alkyl Cyclopentyl, Cyclohexyl, Phenyl, Tolyl oder Benzyl stehen,
R₄, R₅, R₆, R₇, R₈ unabhängig voneinander Wasserstoff, Halogen, Nitro, Cyano, OR_{c}, SR_{c}, NR_{c}R_{d}, COR_{c}, COOR_{c}, CO-NR_{c}R_{d}, (C₁₋₂₀)Alkyl, (C₃₋₁₂)Cycloalkyl, (C₂₋₂₀)Alkenyl, (C₃₋₁₂)Cycloalkenyl, Aryl oder Heteroaryl, bedeuten, wobei die 6 letztgenannten Reste jeweils unabhängig voneinander unsubstiuiert sind, oder substituiert durch
   ein oder mehre Halogen und/oder 1 bis 3 Reste ausgewählt aus der Gruppe (C₁₋₆)Alkyl, Aryl, Heteroaryl, (C₃₋₇)Cycloalkyl, Halogen, OR_{c}, SR_{c}, NR_{c}R_{d}, COR_{c}, COOR_{c}, CO-NR_{c}R_{d}, worin R_{c} und R_{d} unabhängig voneinander für (C₁₋₆)Alkyl, Halo(C₁-₆)alkyl, Cyclopentyl, Cyclohexyl, Phenyl, Tolyl oder Benzyl,
   oder
zwei der Reste R, R₄, R₅, R₆, R₇, R₈, welche benachbart sind, bilden gemeinsam mit dem Atom, an welchem sie gebunden sind, einen Ring aus, wobei dieser ungesättigt oder aromatisch, unsubstituiert oder substituiert sein kann und wobei die durch die betreffenden Reste gebildete Kohlenstoffkette durch ein oder mehrere Heteroatome ausgewählt aus der Gruppe O, S, N oder N(C₁₋₄)Alkyl unterbrochen sein kann.

In einer Verbindung der Formel I können weiterhin Kationen der Formel [A]⁺ protonierte Formen der starken Basen 1,5-Diazabicyclo[4.3.0]non-5-en (DBN); 1,8-Diazabicyclo[5.4.0]-undec-7-en (DBU); 1,4-Diazabicyclo-[2.2.2]-octan (DABCO®); 1,8-Bis-(dimethylamino)-naphthalin (Proton Sponge®); N,N,N',N'-Tetramethylethylendiamin (TMEDA); 4,5-Bis-(dimethyl-amino)-fluoren oder 1,8-Bis-(hexamethyltriamino-phosphazenyl)naphthalin sein.

Besonders bevorzugte Kationen [A]⁺ sind quaternäre Ammonium-Kationen [R'₁R₁R₂R₃N]⁺, quaternäre Phosphonium-Kationen [R'₁R₁R₂R₃P]⁺ oder Guanidinium-Kationen R₃R'₃N(C=NR₁R'₁)NR₂R'₂, worin R₁, R'₁, R₂, R'₂, R₃ und R'₃, unabhängig voneinander für lineares oder verzweigtes (C₁₋₁₀)Alkyl, lineares oder verzweigtes (C₂₋₁₀)Alkenyl - insbesondere Vinyl und Allyl, Cyclohexyl, Phenyl, Benzyl oder Tolyl bedeuten und im Falle des Guanidinium-Kations auch für Wasserstoff stehen.

Besonders bevorzugt sind dabei
- Guanidinium (protoniertes oder quaternäres Guanidin); 1,1,3,3-Tetramethylguanidinium, 1,1,2,3,3-Pentamethylguanidinium, 1,1,2,2,3,3-Hexamethylguanidinium,
- Diethyldimethylammonium, Dipropyldimethylammonium, Dibutyldimethylammonium, Dihexyldimethyl-ammonium, Dioctyldimethylammonium, Triethylmethylammonium, Tripropylmethylammonium, Tributylmethylammonium, Trihexylmethyl-ammonium, Trioctylmethylammonium, Trimethylethylammonium, Trimethylpropylammonium, Trimethylbutylammonium, Trimethylhexyl-ammonium, Trimethyloctylammonium, Tetramethylammonium, Tetraethylammonium, Tetrapropylammonium, Tetrabutylammonium, Tetrahexylammonium, Tetraoctylammonium, 2-Hydroxyethyltrimethylammonium (Cholinium), 2-Methoxyethyl-trimethylammonium (O-Methyl-Cholinium), Triallylmethylammonium,
- Tetramethylphosphonium, Triethylmethylphosphonium, Tripropylmethyl-phosphonium, Tributylmethylpho sphonium, Trihexylmethylpho sphonium, Trioctylmethylphosphonium, Triisobutyl-methyl-phosphonium, Tributylethylphosphonium, Octyl-tributylphosphonium,
- N-Decyl-N-methylpyrrolidinium, N-Octyl-N-methylpyrrolidinium, N-Hexyl-N-methylpyrrolidinium N-Butyl-N-methylpyrrolidinium, N-Propyl-N-methylpyrrolidinium, N-Ethyl-N-methylpyrrolidinium, N,N- Dimethylpyrrolidinium, N-Allyl-N-methylpyrrolidinium,
- N-Decyl-N-methylmorpholinium, N-Octyl-N-methylmorpholinium, N-Hexyl-N-methylmorpholinium N-Butyl-N-methylmorpholinium, N-Propyl-N-methylmorpholinium, N-Ethyl-N-methylmorpholinium, N,N- Dimethylmorpholinium, N-Allyl-N-methylmorpholinium,
- N-Decyl-N-methylpiperidinium, N-Octyl-N-methylpiperidinium, N-Hexyl-N-methylpiperidinium N-Butyl-N-methylpiperidinium, N-Propyl-N-methylpiperidinium, N-Ethyl-N-methylpiperidinium,
- N,N-Dimethylpiperidinium, N-Allyl-N-methylpiperidinium, N-Butyl-pyridinium, N-propyl-pyridinium, N-Ethyl-pyridinium, N-Methyl-pyridinium, N-Decyl-pyridinium, N-Butyl-pyrrolium, N-propyl-pyrrolium, N-Ethyl-pyrrolium, N-Methyl-pyrrolium.

Besonders bevorzugt sind weiters 1,3-Dimethyl-imidazolium, 1,2,3-Trimethylimidazolium, 1-Ethyl-3-methyl-imidazolium, 1-Vinyl-3-methyl-imidazolium, 1-Vinyl-2,3-dimethylimidazolium, 1-Propyl-3-methylimidazolium, 1-iso-Propyl-3-methylimidazolium, 1-Butyl-3-methylimidazolium, 1-Allyl-3-methylimidazolium, 1-Propyl-2,3-dimethylimidazolium, 1-iso-Propyl-2,3-dimethylimidazolium, 1-Allyl-2,3-dimethylimidazolium, 1-Ethyl-2,3-dimethylimidazolium, 1-Butyl-2,3-dimethylimidazolium, 1-Hexyl-3-methylimidazolium, 1-Octyl-3-methylimidazolium, 1-Decyl-3-methylimidazolium, 1,3-Diethylimidazolium, 1,3-Dipropylimidazolium, 1,3-Dibutylimidazolium.

Weiters bevorzugt sind die protonierten Formen der starken Basen 1,5-Diazabicyclo[4.3.0]non-5-en (DBN); 1,8-Diazabicyclo[5.4.0]undec-7-en (DBU); 1,4-Diazabicyclo-[2.2.2]-octan (DABCO®).

[B]^{a-} in Formel I ist vorzugsweise:
- Fluorid, Chlorid, Bromid, Carbonat, Alkylcarbonat, Methylcarbonat; Phosphat; Hydrogenphosphat; Hydroxid, Alkoxid, Aryloxid,
- Carboxylat der allgemeinen Formel

   [Rₙ-COO]⁻ .... (Vd)

   worin Rₙ Wasserstoff, (C₁₋₈)Alkyl, (C₃₋₈)Cycloalkyl, (C₂₋₈)Alkenyl, (C₃₋₈)Cycloalkenyl, Aryl oder Heteroaryl bedeutet, wobei die 6 letztgenannten Reste gegebenenfalls durch ein bis zwei Reste ausgewählt aus der Gruppe (C₁₋₇)Alkyl, Aryl, Heteroaryl, (C₃₋₇)Cycloalkyl, OR_{c}, SR_{c}, NR_{c}R_{d}, COR_{c}, COOR_{c}, CO-NR_{c}R_{d}, wobei R_{c} und R_{d} unabhängig voneinander für (C₁₋₇)Alkyl, Cyclopentyl, Cyclohexyl, Phenyl, Tolyl oder Benzyl bedeuten, substituiert sind,
   oder
- Organisches Phosphat oder Phosphonat der allgemeinen Formeln

   [Rᵤ-OPO₃]²⁻ (Vi)

   [RᵤO-PO₂-ORᵥ]⁻ (Vj)

   [Rᵤ-PO₃]²⁻ (Vk),

   oder

   [Rᵤ-PO₂-ORᵥ]⁻ (Vl),

   worin
   Rᵤ und Rᵥ unabhängig voneinander (C₁₋₈)Alkyl, (C₃₋₈)Cycloalkyl, (C₂₋₈)Alkenyl, (C₃₋₈)Cycloalkenyl, Aryl oder Heteroaryl steht, wobei die 6 letztgenannten Reste unsubstituiert oder durch ein bis zwei Reste substituiert sind, die ausgewählt sind aus der Gruppe (C₁₋₇)Alkyl, Aryl, Heteroaryl, (C₃₋₇)Cycloalkyl, OR_{c}, SR_{c}, NR_{c}R_{d}, COR_{c}, COOR_{c}, CO-NR_{c}R_{d}, worin R_{c} und R_{d} unabhängig voneinander für (C₁₋₇-Alkyl, Cyclopentyl, Cyclohexyl, Phenyl, Tolyl oder Benzyl stehen.

Als Kohlenstoff enthaltende organische, gesättigte oder ungesättigte, acyclische oder cyclische, aliphatische, aromatische oder araliphatische Reste mit 1 bis 8 Kohlenstoffatomen bedeuten der Rest Rₙ beim Carboxylat der Formel (Vd), die Reste Rᵤ und Rᵥ bei den organischen Phosphaten der Formeln (Vi) und (Vj) und den organischen Phosphonaten der Formeln (Vk) und (Vl) unabhängig voneinander bevorzugt
- (C₁₋₈)Alkyl und deren aryl-, heteroaryl-, cycloalkyl-, halogen-, hydroxy-, amino-, carboxy-, formyl-, -O-, -CO-, -CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, , Phenylmethyl (Benzyl), 2-Phenylethyl, Cyclopentylmethyl, 2-Cyclopentylethyl, 3-Cyclopentylpropyl, Cyclohexylmethyl, 2-Cyclohexylethyl, Methoxy, Ethoxy, Formyl oder Acetyl;
- (C₃₋₇)Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl oder 4-Methyl-1-cyclohexyl;
- (C₂₋₈)Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl oder trans-2-Butenyl;
- (C₃₋₇)Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl oder 2,5-Cyclohexadienyl;
- Aryl oder Heteroaryl mit 2 bis 8 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl oder 4-Pyridinyl.

In einem Aspekt ist [B]^{a-} vorzugsweise Fluorid, Chlorid, Bromid, Methylcarbonat, Carbonat, Hydroxid, Methoxid, Ethoxid, Phenolat, Phosphat, Methylsulfat oder Ethylsulfat.

Handelt es sich bei dem Anion [B]^{a-} um ein Carboxylat der Formel (Vd), so steht der Rest Rₙ bevorzugt für Wasserstoff, Phenyl, p-Tolyl, unverzweigtes oder verzweigtes (C₁₋₆)Alkyl, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl oder Octyl.

Besonders bevorzugte Carboxylate (Vd) sind Acetat, Methoxyacetat, Cyanacetat, Propionat, iso-Propionat, Acrylat, Butanoat, iso-Butanoat, Methacrylat, Valeriat, Pivalat, Caprylat, Oxalat, Malonat, Maleinat, Fumarat, Succinat, Glutarat, Pyruvat, Phthalat, Isophthalat, Terephthalat. Ganz besonders bevorzugte Carboxylate sind Formiat, Acetat, Propionat, Benzoat.

Handelt es sich bei dem Anion [B]^{a-} um organisches Phosphat der Formeln (Vi) oder (Vj) oder um organisches Phosphonat der Formeln (Vk) oder (Vl) bedeuten Rᵤ und Rᵥ unabhängig voneinander bevorzugt Methyl, Ethyl, n-Propyl, iso-Propyl, n-Butyl, iso-Butyl, tert.-Butyl, Phenyl und p-Tolyl. Besonders bevorzugte organische Phosphate (Vj) sind Dimethylphosphat, Diethylphosphat, Dibutylphosphat, Bis(2-ethylhexyl)-phosphat, Diphenylphosphat, Dibenzylphosphat. Besonders bevorzugte organische Phosphonate (Vl) sind P-Methylphosphonat, P-Ethylphosphonat, Dimethylphosphonat und Diethylphosphonat.

Den beschriebenen ionischen Flüssigkeiten in einem Verfahren gemäß vorliegender Erfindung können weiters 5 - 75 Gew% Metallsalze der Formel

[M]ₓ^{b+}[B]_{y}^{a-}

zugesetzt sein, worin a, b, x und y voneinander unabhängig die Zahlen 1,2,3 oder 4 bedeuten und wobei das Produkt aus x und b gleich dem Produkt aus y und a ist.

Bevorzugte Metallkationen sind dabei Cr⁺², Cr⁺³, Co⁺², Co⁺³, Cu⁺¹, Cu⁺², Fe⁺², Fe⁺³, Mn⁺², Mn⁺³,Ni⁺², Ni⁺³, Ti⁺², Ti⁺³, Li⁺, Na⁺, K⁺, Cs⁺, Mg²⁺, Ca²⁺, Ba², Sr²⁺, Zr⁴⁺, Sn²⁺, Sn⁴⁺, Ag⁺, Zn²⁺ und Al³⁺, besonders bevorzugte sind Li⁺, Na⁺, K⁺, Mg²⁺, Ca²⁺, Zn²⁺ und Al³⁺

Weiters können den beschriebenen, koordinierenden ionischen Flüssigkeiten auch bis zu 75 Gew.% einer beliebigen anderen, nicht koordinierenden (also Aramid nicht an- oder auflösenden) ionischen Flüssigkeit als Additiv zugesetzt werden.

Die notwendige Menge der koordinierenden, ionischen Flüssigkeit zum Anlösen eines Aramids gemäß vorliegender Erfindung hängt dabei von der chemischen Struktur des Aramids, vom Polymerisationsgrad und von der Art der ionischen Flüssigkeit ab und kann leicht durch Vorversuche ermittelt werden. Zahlreiche Experimente zur Ermittlung des Löseverhaltens von Aramiden finden sich in Beispielen 2 und 3.

Es hat sich herausgestellt, dass das Lösen eines Aramids in einer koordinierenden, ionischen Flüssigkeit gemäß vorliegender Erfindung durch die Temperatur adaptiert werden kann. Zur Lösung wird daher die ionische Flüssigkeit vorzugsweise erhitzt, z.B. auf Temperaturen von 50°C bis 150°C, bevorzugt 50°C bis 100°C, wobei konventionell oder auch durch Einstrahlung von Mikrowelle erhitzt werden kann. Zum Anlösen kann es gegebenenfalls bevorzugt sein bei niedrigen Temperaturen, beispielsweise bei Raumtemperatur zu arbeiten, um das vollständige Lösen zu verhindern. Ebenso wird dem Fachmann offensichtlich sein, dass die Zeit des Behandelns in Schritt a) des erfindungsgemäßen Verfahrens zum Anlösen des Aramids entsprechend zu wählen ist. In Beispiel 1 wird die Temperaturabhängigkeit des Löseverhaltens verdeutlicht, in dem Fasern eines meta-Aramid (Nomex®) in 1-Ethyl-3-methylimidazoliumacetat gelöst werden. Während bei 80°C 10%w nicht vollständig löslich sind, entsteht beim Erhitzen auf 100°C eine klare Lösung.

Es hat sich ferner gezeigt, dass durch Zugabe eines Antisolvens zu einer Lösung eines Aramids in einer koordinierenden, ionischen Flüssigkeit gemäß vorliegender Erfindung Fasern des Aramids aus der Lösung ausgefällt werden können. Durch die Zugabe eines geeigneten Antisolvens kann die Lösekraft auch gezielt so herabgesetzt werden, dass es nur zum Anlösen des Aramids kommt.

Ein Antisolvens schließt dabei ein Solvens ein, das bei Zugabe zu einer Lösung des Aramids zu einer Ausflockung des Aramids führt. Ein Antisolvens zeichnet sich dadurch aus, dass es jedenfalls eine starke Wechselwirkungskraft mit der ionischen Flüssigkeit eingehen kann, wodurch es in Konkurrenz zum gelösten Aramid treten und dieses als Antisolvens koagulieren und schließlich ausfällen kann bzw. das vollständige Auflösen verhindert. Ein bevorzugtes Antisolvens schließt beispielsweise Wasser, Alkohole wie Methanol, Ethanol, Propanole, Butanole, Glycole, Polyalkohole; Amine, wie Alkylamine, z.B. 1-Propylamin, 1-Butylamin; Aldehyde, Ketone, wie Alkylketone, z.B. Aceton, Methylethylketon; halogenierte Kohlenwasserstoffe, z.B. Dichlormethan, Nitrile, wie Acetonitril, Nitrokohlenwasserstoffe, wie Nitromethan und auch organische Säuren, wie Carbonsäuren, z.B. Ameisensäure, Essigsäure, Propionsäure mit ein.

Das Ausfällen durch Zugabe eines Antisolvens stellt somit auch eine Variante dar, wie der Schritt c) des erfindungsgemäßen Verfahrens durchgeführt werden kann, in welchem Schritt, der angelöste Bereich des Aramids nach dem Verbinden wieder koaguliert wird. Dabei wird die ionischen Flüssigkeit zur Ausfällung des Aramids mit einem Antisolvens versetzt und gegebenenfalls die erhaltenen verschweißten Aramidfasern aus der Mischung isoliert.

In einem Aspekt ist das Verfahren, dadurch gekennzeichnet, dass der angelöste Bereich des Aramids wieder koaguliert wird, indem
i) das Aramid durch Zugabe eines Antisolvens ausgefällt wird, oder
ii) die ionische Flüssigkeit entfernt wird, indem auf eine Temperatur oberhalb des thermischen Zersetzungspunkts der ionischen Flüssigkeit, aber unterhalb des thermischen Zersetzungspunkts des Aramids erhitzt wird, wobei die ionische Flüssigkeit in Form gasförmiger Zersetzungsprodukte entfernt wird; oder unter ihren thermischen Zersetzungspunkt, sofern die koordinierende ionische Flüssigkeit einen ausreichend hohen Dampfdruck besitzt um sie gegebenenfalls unter Vakuum abzudestillieren, oder
iii) die ionische Flüssigkeit polymerisiert wird, oder
iv) eine Kombination daraus.

In einer ersten Variante i) stellt die vorliegende Erfindung also ein Verfahren zum Verschweißen von Aramidfasern zur Verfügung, das dadurch gekennzeichnet ist, dass die in der koordinierenden, ionischen Flüssigkeit angelösten Aramidfasern zur Ausfällung des Aramids mit einem Antisolvens versetzt und gegebenenfalls die erhaltenen verschweißten Aramidfasern aus der Mischung isoliert werden. Die nötige Menge des Antisolvens für die Variante i) lässt sich dabei leicht durch Vorversuche ermitteln. Es wurde z.B. gefunden, dass eine Zugabe von einem bis fünf Teilen Wasser zu einer Lösung eines Aramids in einer koordinierenden, ionischen Flüssigkeit ausreicht, um Aramidfasern aus der Lösung auszufällen.

Aramide sind im allgemeinen thermisch (bis etwa 400°C) sehr stabil, hingegen koordinierende ionische Flüssigkeiten bereits bei Temperaturen um die 100-250°C thermisch instabil, sodass sich ionische Flüssigkeiten bei den angegebenen Temperaturen in molekulare Verbindungen zersetzen können, welche verdampfbar sind, was durch Anlegen von Vakuum noch beschleunigt werden kann. Da auf diesem Wege die ionische Flüssigkeit entfernt wird, können Aramidfasern können somit auch durch thermische Behandlung wieder zum koagulieren gebracht werden. Unter diesem Aspekt wird auf ionische Flüssigkeiten hingewiesen, wie sie in der WO 2009/027250 der BASF SE beschrieben sind. Diese Verbindungen stehen in einem chemischen Gleichgewicht mit neutralen, nicht ionischen Verbindungen. Über diese neutralen Produkte lässt sich die ionische Flüssigkeit zum Zwecke der Aufreinigung bzw. Abtrennung von Verunreinigungen abdestillieren. Im Sinne des vorliegenden Verfahrens, kann wie in Beispiel 9 gezeigt, die ionische Flüssigkeit so entfernt werden, und das Aramid zur Koagulation gebracht werden. Die Klasse der so entfernbaren ionischen Flüssigkeiten umfasst beispielsweise solche mit einem Kation ausgewählt aus der Gruppe umfassend 1,3-Dimethylimidazolium, 1,3-Diethylimidazolium, 1-Ethyl-3-methylimidazolium, 1-Propyl-3-methylimidazolium und 1-Butyl-3-methylimidazolium und Anion ausgewählt aus Chlorid, Formiat, Acetat, Propionat, Dimethylphosphat, Diethylphosphat, Dibutylphosphat, Dimethylphosphonat und Carboxylate (linear oder cyclisch mit einer oder zwei Carboxylatgruppen).

Ebenso stellt die vorliegende Erfindung ein Verfahren zur Herstellung von Aramidfasern zur Verfügung, das dadurch gekennzeichnet ist, dass eine Lösung eines Aramids in einer koordinierenden ionischen Flüssigkeit auf eine Temperatur oberhalb des thermischen Zersetzungspunkts der ionischen Flüssigkeit, aber unterhalb des thermischen Zersetzungspunkts des Aramids erhitzt wird, wobei die ionische Flüssigkeit in Form gasförmiger Zersetzungsprodukte entfernt und das verschweißte Aramid auf diese Weise gewonnen wird.

Eine weitere Alternative, um die native Struktur der Aramidfasern wieder herzustellen, ist die ionische Flüssigkeit als Anlösereagens mittels chemischer Modifikation zu entfernen. Dabei können die Komponenten der ionischen Flüssigkeit so gewählt sein, dass sie polymerisiert werden können. Nach der Polymerisation stehen sie nicht mehr als geeignete Mittel zum Anlösen des Aramids zur Verfügung und das Aramid fällt in verschweißter Form aus. Der Fachmann kann ionische Flüssigkeiten, die so entfernt werden können, an Hand ihrer Funktionalitäten aussuchen. Zum Polymerisieren geeignet sind beispielsweise ionische Flüssigkeiten deren Kation und/oder Anion ungesättigten Kohlenwasserstoff-Seitenketten aufweist. Polymerisierbare Kationen sind z.B. 1-Vinyl-3-methylimidazolium, 1-Allyl-3-methylimidazolium, Triallylmethylammonium, die auch unabhängig von Anion polymerisieren. Als polymerisierbare Anionen sind z.B. Acrylate und Allylcarbonat anzuführen. Aber der Fachmann kann auch aus weiteren koordinierenden Anionen mit Doppelbindung auswählen.

Im Zuge des Koagulierens können auch verschiedene Methoden kombiniert werden, die zum Ziel haben, die nativen Interaktionen der Aramide herzustellen und das Anlösen der Fasern aufzuheben.

Weiters offenbart die vorliegende Anmeldung verschweißte Aramidfaser(n).

Eine verschweißte Aramidfaser erhältlich nach einem erfindungsgemäßen Verfahren kann beispielsweise eine einzelne Aramidfaser sein, die über verschiedene Bereiche mit sich selber verschweißt ist. Beispielsweise kann eine verschweißte Aramidfaser ein Ring bilden, in dem der Ringschluss durch das Verschweißen der Enden derselben Faser erreicht wurde. Außerdem kann es sich bei verscheißten Aramidfasern um eine erste und zumindest eine weitere Aramidfaser handeln, die miteinander über mindestens einen Kontaktbereich verschweißt sind. Verschweißte Aramidfasern sind auch zweidimensionale Anordnungen, die aus mehreren miteinander verschweißten Aramidfasern eines Gewebes bestehen. Ein verschweißter Bereich kann beispielsweise mikroskopisch durch den Faserverlauf erkennbar sein.

Insbesondere betrifft die Erfindung verschweißte Aramidfasern erhältlich nach einem erfindungsgemäßen Verfahren.

In einem weiteren Aspekt stellt die Erfindung einen Formkörper aus verschweißten Aramid zur Verfügung erhältlich nach einem erfindungsgemäßen Verfahren.

Ein erfindungsgemäßer Formkörper kann dabei verschiedene Formen annehmen. Durch nebeneinander geschweißte Aramidfasern und -folien können zwei-dimensionale flächige Aramidformkörper beliebiger Größe hergestellt werden. Praktischerweise werden dafür nur die Randbereiche der einzelnen Einheiten angelöst, miteinander in Kontakt gebracht und erfindungsgemäß verbunden. Diese Verbindungsstellen weisen aufgrund der Verschweißung eine Stabilität auf, die mit der innerhalb der einzelnen Einheiten vergleichbar ist, zumindest aber besser als wenn die Einheiten über alternative Verbindungen miteinander verknüpft sind. Erfindungsgemäß verschweißte Folien können im Gegensatz zu kalandrierten Geweben nahezu beliebig geformte und beliebig große Flächen annehmen. Und weisen dabei gegenüber verklebten Flächen vorteilhafte Materialeigenschaften auf.

Für die Herstellung von dreidimensionalen Formkörpern können Aramidfasern oder - einheiten aufeinandergeschichtet miteinander verschweißt werden. Mit Hilfe von Schablonen oder Stützen zur externen Formgebung können auch Hohlkörper und nahezu beliebige Formen erreicht werden. Dreidimensionale Aramidformkörper können je nach Aufbau und Zweck selbst formgebend gestaltet sein, d.h. im Gegensatz zu Folien die notwendige Steifigkeit aufweisen, um als Bauteil zu dienen. Für hohe Festigkeiten hat es sich als vorteilhaft erwiesen, den Formkörper in Sinne einer Nachbehandlung nach dem Koagulieren zu erhitzen. Damit werden das vollständige Entfernen des Antisolvens und das Koagulieren verbessert. Auch ist es vorteilhaft, wenn die Fasern nicht nur an Kreuzungspunkten, sondern über längere parallele Aramidfaserbereiche miteinander verschweißt werden.

Auch Aramidgewebe, also Anordnungen von Aramidfasern, können entsprechend dem erfindungsgemäßen Verfahren so modifiziert werden, dass die einzelnen Fasern miteinander verbunden sind bzw. ineinander übergehen. Im Gegensatz zu bisher bekannten Aramidgeweben für schusssichere Bekleidung, kann so auch stichsicheres Material für Schutzkleidung bereitgestellt werden, da die einzelnen Aramidfasern dem eindringenden Stichwerkzeug nicht mehr ausweichen und somit keine Durchtrittsspalte mehr entstehen können.

Die Erfindung stellt weiters einen Fördergurt umfassend eine Karkasse bereit, der dadurch gekennzeichnet ist, dass die Karkasse ein Formkörper aus verschweißtem Aramid umfasst, erhältlich nach einem erfindungsgemäßen Verfahren.

Fördergurte werden in Förderbändern oder Gurtbandförderern eingesetzt werden, wobei im Sinne dieser Erfindung auch Transportbänder erfasst sind. Die Karkasse bildet dabei das Zugkraft vermittelnde Element und ist hier synonym zu dem Bergriff Zugträger zu verstehen.

Die Karkasse eines erfindungsgemäßen Fördergurts ist bevorzugt aus mindestens einem folienartigen Aramidband oder parallelen Aramidfasern aufgebaut, die mittels einer verschweißten Kontaktstelle zu einem Ring geschlossen wurden. Damit steht über die gesamte Länge des Förderbands die gewünschte Zugfestigkeit bereit. Auch ein guter Durchschlagschutz wird durch eine erfindungsgemäße Karkasse gewährleistet.

Neben diesen Anwendungen sind erfindungsgemäßen Formkörper auch im Fahrzeugbau geeignet, beispielsweise für die Luftfahrt. Speziell im Flugzeugbau kann verschweißtes Aramid vorteilhaft zum Einsatz kommen, da durch das Herstellen einer stabilen Verbindung (im Gegensatz zu losen Aramidfasern) auf den Einsatz von umgebender Polymermatrix verzichtet werden kann bzw. diese zumindest reduziert werden kann. Dadurch kann nicht nur Material eingespart werden, sondern es wird auch die Aufgabe gelöst Gewicht einzusparen.

Die erfindungsgemäßen Erkenntnisse, zum Lösen und Anlösen von Aramiden mit ionischen Flüssigkeiten, lassen sich auch vorteilhaft auf andere Verfahren mit Aramiden übertragen.
Beispiele wären
- eine Modifizierung der Oberflächen von Aramiden, z.B. zur Anbindung an andere Materialien (chemischer Haftvermittler),
- die Herstellung von Composites, indem ein Aramid und ein anderes Polymer / Biopolymer gemeinsam mit einer koordinierenden ionischen Flüssigkeit angelöst und durch Zugabe eines Antisolvens miteinander verschweißt werden.
- die Herstellung einer Lösung von Aramiden in koordinierender ionischer Flüssigkeit und die Verwendung dieser als Klebstoff hoher Festigkeit im Allgemeinen sowie zum Verkleben / Verschweißen von Aramiden oder anderer in der ionischen Flüssigkeit quell- oder lösbarer Polymere und Biopolymere miteinander, wobei die Koagulation des gelösten Aramids durch Zugabe geeigneter Antisolventien in flüssiger oder Dampfphase erfolgen kann oder aber auch durch Aufnahme von Luftfeuchtigkeit, da insbesondere koordinierende ionische Flüssigkeiten stark hygroskopisch sind,
- die Entfernung von Aramiden von Materialoberflächen im Sinne einer Reinigung.

In den nachfolgenden Beispielen sind alle Temperaturangaben in Grad Celsius (°C). Die Beispiele führen neben Experimenten zum Löseverhalten von Aramiden beispielhafte Ausführungsvarianten des Verfahrens zum Verschweißen von Aramidfasern auf, sowie die Herstellung erfindungsgemäßer Formkörper.

Die erläuternden Zeichnungen, zeigen:
Fig. 1 Querschnitt einer Anordnung zum Verschweißen von einer ersten Aramidfaser 102 und einer zweiten Aramidfaser 103 auf einem Objektträger 101, wobei die Fasern über einen Bereich der Länge L überlappen;
Fig. 2 Querschnitt einer Anordnung zur Herstellung eines zylinderförmigen Formkörper, wobei auf einem Stützkörper 201 eine Aramidgewebe 202 angeordnet ist, dass mit einem Gitter 203 umgeben ist, und mit Klammern 204 fixiert wird;
Fig. 3 Querschnitt einer Anordnung zur Herstellung eines dreidimensionalen Formkörper, wobei ein Aramidgewebe 302, zwischen einem ersten Stützgitter 301 und einem zweiten Stützgitter 303 eingebettet ist und die Anordnung mit Klammern 304 fixiert wird.

### Beispiel 1

Nomex® 1780dtex Fasern wurden bei 80°C für 3h in 1-Ethyl-3-methylimidazolium-acetat unter magnetischem Rühren gelöst. Bei Zugabe von 5%w Nomex®-Fasern entstand eine klare, viskose Lösung. Bei Zugabe von 10%w Nomex®-Fasern lösten sich zunächst nicht alle Fasern vollständig auf, bei Erhitzen auf 100°C entstand wieder eine klare, viskose Lösung. Bei 100°C konnte durch weitere Zugabe von Nomex®-Fasern die Konzentration auf klar gelöste 20%w erhöht werden, wobei eine hochviskose Lösung entstand.

10g 1-Ethyl-3-methylimidazolium-acetat (CAS 143314-17-4; Gehalt HPLC >98%w, Wasser <1%w) wurden mit 100 mg Technora® T-240 220 dtex Fasern versetzt und über Nacht in einem verschlossenen Rundkolben bei 80°C magnetisch gerührt. Die Aramid-Copolymerfasern lösten sich vollständig auf und es entstand eine homogenes Gemisch. Nach Abkühlen und Zugabe von ca. 50 Gew% Wasser als Antisolvens wurden Fasern wieder ausgefällt und durch Rühren mit einer Glaskapillare zumindest teilweise um die Kapillare "gewickelt". Bereits bei Zugabe von ca. 10%w Wasser erfolgte eine Eintrübung mit beginnendem Ausfällen. Es kann angenommen werden, dass 1-Ethyl-3-methylimidazolium-acetat mit bis zu 10%w Wasser noch in der Lage ist, Technora® Fasern zu lösen.

### Beispiel 2

Jeweils 3mg Technora® T-240 220 dtex Fasern (ein para-Aramid Copolymer) und Nomex®-1780 dtex Fasern (ein meta-Aramid) wurden mit jeweils 1g der folgenden, trockenen (<1%w Wasser) ionischen Flüssigkeiten bzw. Salzen versetzt und für drei Stunden bei 100°C gerührt. Das Solvatationsverhalten der Aramidfasern wurde beobachtet und gemessen, wobei die in der Tabelle 3 angegebenen Ergebnisse erhalten wurden.

**Tabelle 3**

| **Nr.** | **Ionische Flüssigkeit / Salz** | **CAS Nr.** | **Technora®** | **Nomex®** |
|---|---|---|---|---|
| 1 | 1-Ethyl-3-methylimidazolium-acetat | 143314-17-4 | vollst. gelöst | vollst. gelöst |
| 2 | 1-Butyl-2,3-dimethylimidazolium-chlorid | 98892-75-2 | vollst. gelöst | vollst. gelöst |
| 3 | 1-Butyl-3-methylimidazolium-acetat | 284049-75-8 | vollst. gelöst | vollst. gelöst |
| 4 | 1-Butyl-3-methylimidazolium-chlorid | 79917-90-1 | vollst. gelöst | vollst. gelöst |
| 5 | 1-Ethyl-3-methylimidazolium-diethylphosphat | 848641-69-0 | vollst. gelöst | vollst. gelöst |
| 6 | 1-Ethyl-3-methylimidazolium-benzoat | 150999-33-0 | vollst. gelöst | vollst. gelöst |
| 7 | 1-Ethyl-3-methylimidazolium-dimethylphosphonat | 1059603-87-0 | vollst. gelöst | vollst. gelöst |
| 8 | 1-Hexyl-3-methylimidazolium-chlorid | 171058-17-6 | vollst. gelöst | vollst. gelöst |
| 9 | 1-Octyl-3-methylimidazolium-chlorid | 64697-40-1 | vollst. gelöst | vollst. gelöst |
| 10 | Tributylmethylammonium-acetat | 131242-39-2 | vollst. gelöst | vollst. gelöst |
| 11 | Tributylmethylphosphoniumdibutylphosphat | 947601-89-0 | vollst. gelöst | geliert |
| 12 | Tributylmethylphosphoniummethylcarbonat | 120256-45-3 | vollst. gelöst | geliert |
| 13 | Methoxyethyltrimethylammonium-acetat | | vollst. gelöst | vollst. gelöst |
| 14 | 1-Ethyl-3-methylimidazolium-octanoat | 1154003-55-0 | vollst. gelöst | vollst. gelöst |
| 15 | 1-Ethyl-3-methylimidazolium-decanoat | 1289051-61-1 | vollst. gelöst | vollst. gelöst |
| 16 | 1,1,3,3-Tetramethylguanidinium-acetat | 16836-76-3 | geliert | angelöst |
| 17 | 1-Decyl-3-methylimidazolium-chlorid | 171058-18-7 | geliert | geliert |
| 18 | Trioctylmethylammonium-acetat | 35675-83-3 | geliert | angelöst |
| 19 | Tetrabutylammonium -chlorid | 1112-67-0 | vollst. gelöst | geliert |
| 20 | 1-Benzyl-3-methylimidazolium-chlorid | 36443-80-8 | geliert | geliert |
| 21 | Trioctylmethylphosphonium-chlorid | 35675-28-6 | vollst. gelöst | angelöst |
| 22 | Trioctylmethylphosphonium-acetat | | vollst. gelöst | angelöst |
| 23 | 1-Ethyl-3-methylimidazolium-methylsulfat | 516474-01-4 | unverändert | geliert |
| 24 | Tributylammonium-chlorid | 38466-21-6 | unverändert | unverändert |
| 25 | 1-Ethyl-3-methylimidazolium-sulfat | 143314-18-5 | unverändert | unverändert |
| 26 | 1-Ethyl-3-methylimidazolium-ethylphosphonat | 1159682-38-8 | unverändert | unverändert |
| 27 | 1-Butyl-3-methylimidazolium-nitrat | 179075-88-8 | unverändert | unverändert |
| 28 | 1-Butyl-3-methylimidazolium-tetrachloroferrat | 359845-21-9 | unverändert | unverändert |
| 29 | 1-Butyl-3-methylimidazolium-tetrafluoroborate | 174501-65-6 | unverändert | unverändert |
| 30 | 1-Ethyl-3-methylimidazolium-methansulfonat | 145022-45-3 | unverändert | unverändert |
| 31 | 1-Ethyl-3-methylimidazolium-thiocyanat | 331717-63-6 | unverändert | unverändert |
| 32 | 1-Ethyl-3-methylimidazolium-trifluormethansulfonat | 145022-44-2 | unverändert | unverändert |
| 33 | Dimethyl-2-hydroxyethylammonium-propionat | 932394-20-2 | unverändert | unverändert |
| 34 | Triethylammonium-methansulfonat | 93638-15-4 | unverändert | unverändert |
| 35 | 1-Ethyl-3-methylimidazolium-salicylat | 945611-28-9 | unverändert | unverändert |
| 36 | 1-Ethyl-3-methylimidazolium-octa d ecanoat | 888724-53-6 | unverändert | unverändert |
| 37 | Lithiumacetat dihydrat | 6108-17-4 | unverändert | unverändert |
| 38 | Zinkchlorid- Monohydrat | 21351-92-8 | unverändert | unverändert |
| 39 | N-Methylmorpholin-N-oxid-Monohydrat | 70187-32-5 | unverändert | unverändert |
| 40 | Cholinchlorid-Harnstoff-Gemisch (molares Verhältnis 1:2, *Deep Eutectic Solvent*) | 8069-55-4 | unverändert | unverändert |
| 41 | Tributylmethylphosphonium-phosphat / DMSO 1:1 | | vollst. gelöst | vollst. gelöst |

Die Aramidfasern, welche mit den ionischen Flüssigkeiten Nr. 1-15 versetzt worden waren, haben sich vollständig aufgelöst und konnten durch Zugabe von Wasser als Antisolvens wieder ausgefällt werden. Die ionischen Flüssigkeiten 16 bis 19 zeigten eine stark quellende Wirkung, beide untersuchten Fasertypen wurden jedoch nur geliert, bzw. teilweise aber nicht vollständig aufgelöst; die ionische Flüssigkeiten 20 bis 22 lösten nur das Aramid-Copolymer oberflächlich an. Auch bei den ionischen Flüssigkeiten 16 bis 22 konnte durch Zugabe von Wasser der Quellprozeß rückgängig gemacht werden. Alle anderen ionischen Flüssigkeiten (24 bis 36) hinterließen die Fasern unverändert. Die Gegenbeispiele 37 bis 40 stellen Salzschmelzen oder organische Verbindung dar, die der Fachmann zum Lösen von anderen Fasern kennt, wie N-Methylmorpholin-N-oxid-Monohydrat. Es zeigt sich, dass diese Mittel sich im Gegensatz zu ionischen Flüssigkeiten nicht zum Lösen von Aramidfasern eignen. Dies gilt offensichtlich auch für Nr. 40, einem Vertreter sogenannter "Deep Eutectic Solvents"; hier koordiniert das Cholinium-Kation mit dem Harnstoff und nicht mit der Aramid-Faser. Nr. 41 zeigt, dass auch ein Gemisch einer ionischen Flüssigkeit mit einem Cosolvens ein gutes Lösungsverhalten zeigt.

Es kann daraus gefolgert werden, dass die Fähigkeit zur Lösung von den besonderen Eigenschaften der ionischen Flüssigkeiten abhängen. Ferner zeigen sich auch innerhalb der ionischen Flüssigkeiten Unterschiede in den Lösungseigenschaften. Bezüglich des Kations, sollte dieses quaternär sein. Zum Lösen ungeeignet sind protonierte Kationen, mit zu geringer Basizität, z.B. ionische Flüssigkeiten Nr. 24, 33 und 34. Das Lösen hängt auch vom Anion ab - welches stark koordinierend sein muss. Eine erhöhte Basizität des Anions bzw. keine aziden Protonen scheint ebenfalls günstig zu sein.

Mit zunehmender Größe bzw. steigender Seitenkettenlänge der quaternären Kationen sinkt die Lösekraft der ionischen Flüssigkeit, was sich dadurch zeigt, sie die Aramide nicht vollständig lösen, nur anlösen oder gelieren zeigt. Diese "modulierte" Lösekraft kann gewünscht sein, um Fasern mit sich selbst oder anderen Polymerfasern nur oberflächlich zu verschweißen, ohne die ganze Faser komplett aufzulösen oder die inneren Filamente der Faser miteinander zu verschweißen. Ein Vergleich von an der 1-Position unterschiedlich substituierten 3-methylimidazolim-chlorid Salzen zeigt, dass 1-Butyl (Nr. 3) und 1-Octyl (Nr. 9) die Aramidfasern vollständig lösen, während 1-Decyl (Nr. 17) zum Gelieren beider Fasertypen führt ebenso wie der sperrige und unflexible 1-Benzyl-Rest (Nr. 20).

Interessanterweise konnte 1-Ethyl-3-methylimidazolium-methylsulfat (Nr. 23) - als einziger Vertreter der untersuchten Verbindung mit schwefelhaltigem Anion - Nomex® Fasern gelieren. Es scheint Alkylsulfate mit kurzen Alkylketten sind wahrscheinlich auf Grund des relativ hohen Anteil an Sauerstoff geeignete koordinierende Anionen. Diese Vertreter der ionischen Flüssigkeiten sind kommerziell gut zugänglich. Es kann sich daher bei ionischen Flüssigkeiten mit dem Anion Methylsulfat oder Ethylsulfat um bevorzugte ionische Flüssigkeiten für erfindungsgemäße Verfahren handeln.

### Beispiel 3

Jeweils 3mg Kevlar® K29 Fasern (ein para-Aramid) wurden mit jeweils 1g der folgenden ionischen Flüssigkeiten versetzt und für drei Stunden bei 100°C gerührt. Das Solvatationsverhalten der Aramidfasern in verschiedenen ionischen Flüssigkeiten wurde beobachtet und gemessen, wobei die in der Tabelle 4 angegebenen Ergebnisse erhalten wurden.

**Tabelle 4**

| **Nr.** | **Ionische Flüssigkeit / Salz** | **CAS Nr.** | **Kevlar®** |
|---|---|---|---|
| 1 | 1-Ethyl-3-methylimidazolium-fluorid | 133928-43-5 | geliert |
| 2 | 1-Ethyl-3-methylimidazolium-fluorid / DMSO 1:1 | 133928-43-5 | vollst. gelöst |
| 3 | Tetrabutylammonium-fluorid hydrate | 22206-57-1 | ungelöst |
| 4 | Tetrabutylammonium-fluorid hydrate/ DMSO 1:1 | 22206-57-1 | fast vollst. gelöst |
| 5 | Tetrabutylammonium-fluorid / DMSO 1:1 | 429-41-4 | vollst. gelöst |
| 6 | Tetrabutylammonium-hydroxid / DMSO 1:1 | 2052-49-5 | vollst. gelöst |
| 7 | Dimethylmorpholinium-hydroxid / DMSO 1:1 | 69013-77-0 | geliert |
| 8 | Tetrabutylammonium-fluorid / N-Methyl-2-pyrrolidon 1:1 | 429-41-4 | geliert |
| 9 | Tetrabutylammonium-fluorid / N-Methylimidazol 1:1 | 429-41-4 | geliert |
| 10 | Tetrabutylammonium-fluorid / Pyridin 1: 1 | 429-41-4 | geliert |
| 11 | Tetrabutylammonium-fluorid /Triethylphosphat 1:1 | 429-41-4 | unverändert |

In allen anderen im Beispiel 2 beschriebenen ionischen Flüssigkeiten und Salzen war Kevlar® K29 vollständig unlöslich. Der Vergleich zwischen Beispiel 2 und Beispiel 3 zeigt, dass sich die para-Aramidfaser Kevlar® anders verhält als die meta-Aramidfaser Nomex® oder das para-Aramid Copolymer Technora®. Es ist anzunehmen, dass die Wasserstoffbrückenbindungen bei der Interaktion zweier para-Aramidpolymere besonders stark sind, zum einen auf Grund der stark polarisierten N-H Bindungen durch die para-Position und zum anderen wegen der optimalen geometrischen Anordnung. Zum Lösen einer para-Aramidfaser eignen sich nur solche ionischen Flüssigkeiten, die ein stark koordinierendes Anion aufweisen. Ein Gelieren konnte mit dem Halogenid Fluorid als Anion gezeigt werden (Nr. 1), wobei getrocknete Varianten sich besser eignen als das Hydrat (Nr. 3). Auch Hydroxid ist als Anion einer ionischen Flüssigkeit zum Anlösen geeignet (Nr. 6 und 7). Ebenso werden Alkoxide und Aryloxide als geeignete Anionen vermutet. Bezüglich der Kationen, konnte sowohl für heteroaromatische Kationen (Nr. 1 und 2) also auch quarternäre Ammoniumverbindungen (Nr. 3 bis 10) zumindest anlösen erreicht werden.

Zusätzlich bewährt sich hier zum vollständigen Lösen der Zusatz von DMSO als Kosolvens, um die Lösungseigenschaften für die para-Aramidfasern zu optimieren (Nr. 2, 4, 5, und 6). Auch für weitere organische Verbindungen konnte dieser Effekt als Kosolvens gezeigt werden (Nr. 8 bis 10).

### Beispiel 4

100mg Technora® T-240 220 dtex Fasern wurden mit 10g trockenem 1-Butyl-3-methylimidazolium-acetat (BMIM-OAc) versetzt und für 3 Stunden verschlossen bei 80°C in den Trockenschrank gestellt, wobei ab und zu geschüttelt wurde. Es entstand eine viskose Lösung. Danach wurde die Aramid-Lösung (IL) unter Umrühren mit verschiedenen Lösungsmitteln (LM) im Volumsverhältnis IL : LM versetzt.
Die Auswirkungen diverser Lösungsmittel auf eine Lösung von Aramid-Copolymer-Fasern in 1-Butyl-3-methylimidazolium-acetat sind in Tabelle 5 gezeigt.

**Tabelle 5**

| **Nr.** | **Lösungsmittel** | **ε** | **α** | **β** | **π*** | **IL : LM** | **Beobachtung** |
|---|---|---|---|---|---|---|---|
| 1 | Dimethylsulfoxid | 46,5 | 0,00 | 0,76 | 1,00 | 1:1-1:10 | klare Lösung |
| 2 | N,N-Dimethylformamid | 36,7 | 0,00 | 0,69 | 0,88 | 1:1-1:10 | klare Lösung |
| 3 | N-Methyl-2-pyrrolidon | 32,2 | 0,00 | 0,77 | 0,92 | 1:1-1:10 | klare Lösung |
| 4 | N-Methylimidazol | - | 0,00 | 0,82 | - | 1:1-1:10 | klare Lösung |
| 5 | Pyridin | 12,9 | 0,00 | 0,64 | 0,87 | 1:1-1:10 | klare Lösung |
| 6 | Triethylphosphat | 13,0 | 0,00 | 0,77 | 0,72 | 1:1-1:10 | klare Lösung |
| 7 | Acetonitril | 35,9 | 0,19 | 0,40 | 0,66 | 1:5 | spontanes Ausflocken |
| 8 | Essigsäure | 6,2 | 1,12 | 0,45 | 0,64 | 1:5 | spontanes Ausflocken |
| 9 | Methanol | 32,7 | 0,98 | 0,66 | 0,60 | 1:5 | spontanes Ausflocken |
| 10 | Nitromethan | 35,9 | 0,22 | 0,06 | 0,75 | 1:5 | spontanes Ausflocken |
| 11 | 2-Propanol | 19,9 | 0,76 | 0,84 | 0,48 | 1:5 | spontanes Ausflocken |
| 12 | Wasser | 78,4 | 1,17 | 0,47 | 1,09 | 1:5 | spontanes Ausflocken |
| 13 | 1-Butylamin | 5,4 | 0,00 | 0,72 | 0,31 | 1:5 | langsames Ausflocken |
| 14 | 1-Propylamin | - | - | - | - | 1:5 | langsames Ausflocken |
| 15 | Aceton | 20,6 | 0,08 | 0,48 | 0,62 | 1:5 | langsames Ausflocken |
| 16 | Dichlormethan | 8,9 | 0,13 | 0,10 | 0,73 | 1:5 | langsames Ausflocken |
| 17 | 1,4-Dioxan | 2,2 | 0,00 | 0,37 | 0,49 | 1:5 | unmischbar, Trübung |
| 18 | Ethylacetat | 6,0 | 0,00 | 0,45 | 0,45 | 1:5 | unmischbar, Trübung |
| 19 | Tetrah ydrofuran | 7,6 | 0,00 | 0,55 | 0,55 | 1:5 | unmischbar, Trübung |
| 20 | Toluol | 2,4 | 0,00 | 0,11 | 0,49 | 1:5 | unmischbar |

Die Ergebnisse in Tabelle 5 zeigen das Verhalten nach Zugabe dieser Lösungsmittel und setzt dieses Verhalten in Beziehung zur relativen Dielektrizitätskonstante ε und den Kamlet-Taft Solvens-Parametern α, β und π* ("Solvents and Solvent Effects in Organic Chemistry"; Christian Reichardt, WILEY-VCH Verlag, Weinheim 2003, ISBN 3-527-30618-8; Kamlet, M. J.; Abboud, J. L.; Taft, R. W. J. Am. Chem. Soc. 1977, 99, 6027; Kamlet, M. J.; Taft, R. W. J. Am. Chem. Soc. 1976, 98, 377; Kamlet, M. J.; Hall, T. N.; Boykin, J.; Taft, R. W. J. Org. Chem. 1979, 44, 2599; Taft, R. W.; Kamlet, M. J. J. Am. Chem. Soc. 1976, 98, 2886). Betrachtet man die Ergebnisse der Tabelle 5, so kann man die Lösungsmittel in drei Gruppen aufteilen:
Gruppe III: Die Lösungsmittel Nr. 17-20 zeigen niedrige Dielektrizitätskonstante (ε < 8), fehlende Wasserstoffbrückenbindungs-Donoreigenschaft (a = 0) und niedrige bis mittlere Wasserstoffbrückenbindungs-Akzeptoreigenschaft (β < 0,55). Diese Lösungsmittel weisen zu geringe Wechselwirkungskräfte auf, um die koordinierende ionische Flüssigkeit lösen zu können und sind daher nicht geeignet. In diese Gruppe fallen u.A. Ester, Ether, Kohlenwasserstoffe.
Gruppe II: Die Lösungsmittel Nr. 7-16 zeigen entweder niedere Dielektrizitätskonstanten von ε = 5 - 9, dafür aber sehr hohe Werte für α (Essigsäure), β (1-Butylamin) oder π* (Dichlormethan) oder sie zeigen hohe Dielektrizitätskonstanten von ε = 20 - 78 und zumindest einen mittleren bis hohen Wert für α, β und π*. Sie zeichnen sich also dadurch aus, dass sie zumindest eine starke Wechselwirkungskraft mit der ionischen Flüssigkeit eingehen können, wodurch sie in Konkurrenz zum gelösten Aramid treten und dieses als Antisolvens koagulieren und schließlich ausfällen. Besonders geeignet zeigten sich dabei solche Lösungsmittel, welche einen großen α -Wert zeigen (a > 0,7), also über Wasserstoffbrückenbindungen als starke Donoren wirken und in der ionischen Flüssigkeit die Wasserstoffbrückenbindungs-Akzeptoren - also die koordinierenden Anionen - blockieren. In diese Gruppe fallen Wasser, Alkohole, Carbonsäuren, Amine, Aldehyde, Ketone, Dichlormethan, Acetonitril und Nitromethan, besonders bevorzugt Wasser; Alkohole wie Methanol, Ethanol, Propanole, Butanole, Glycole, Polyalkohole; Carbonsäuren wie Ameisensäure, Essigsäure, Propionsäure; Ketone wie Aceton, Methylethylketon. Allgemein sind solche Lösungsmittel bevorzugt, welche ein ε ≥ 5, ein α ≥ 0,22 und ein β und/oder π* ≥ 0,4 aufweisen, besonders bevorzugt solche welche ein ε ≥ 5, ein α ≥ 0,7 und ein β und/oder π* ≥ 0,4 aufweisen.
Gruppe I: Die Lösungsmittel Nr. 1-6 zeigen mittlere bis hohe Dielektrizitätskonstanten von ε = 13 - 47, fehlende Wasserstoffbrückenbindungs-Donoreigenschaft (α = 0), hohe Wasserstoffbrückenbindungs-Akzeptoreigenschaft (β > 0,6) und sehr hohe Dipolarität / Polarisierbarkeit π* > 0,7).
   Sie sind offensichtlich in der Lage, das durch koordinative Bindungen in der ionischen Flüssigkeit gelöste Kevlar-Polymer samt der ionischen Flüssigkeit in Lösung zu halten; da die hohen Werte für ε und β einerseits typisch sind für Lösungsmittel, welche - wie dem Fachmann bekannt - Ionen gut lösen können und gleichzeitig keine Wasserstoffbrückenbindungen zu den Anionen gebildet werden (a = 0), bleiben die koordinativen Bindungen der Anionen zum Kevlar Polymer offensichtlich erhalten und das Polymer bleibt ebenfalls in Lösung. In diese Gruppe fallen daher alle hochpolaren aprotischen Lösungsmittel, wie z.B. aromatische Stickstoff-Heterocyclen, cyclische und lineare Carbonsäureamide, Sulfoxide, Sulfone, Alkylphosphorsäurester und -amide, cyclische Kohlensäureester. Bevorzugt sind ganz allgemein solche Lösungsmittel, welche ein ε ≥ 10, ein α < 0.05, ein β > 0,60 und/oder ein π* > 0,65 aufweisen, wie zum Beispiel Pyridine, Dimethylcyanamid, Quinoline, N,N-Dimethylformamid, N,N-Dimethylacetamide, N,N-Diethylacetamide, Dimethylsulfoxide, Triethylphosphate, Trimethylphosphate, Tributylphosphate, N-Methylpyrrolidone, Dimethylphthalat, N,N,N',N'-Tetramethylharnstoff, Thiolane-1-oxid, N,N,N',N'-Tetramethylguanidin, N-Alkylimidazole, Aniline, Dialkylsulfoxide, Diarylsulfoxide.

Aus dem in Beispiel 4 beschriebenen Ergebnissen folgt, dass Lösungsmittel der Gruppe I sich ideal als Cosolvens eignen um damit z.B. Viskosität und Erstarrungspunkt der ionischen Aramid-Lösung einzustellen, die Solvatationseigenschaften der ionischen Flüssigkeit zu modulieren (siehe Beispiel 3), chemische Reaktionen und Modifikationen des gelösten Kevlarpolymers durchzuführen, Edukte für solche Reaktionen in Lösung zu bringen, Additive in Lösung zu bringen, die Oberflächenspannung und Benetzungsfähigkeit zu verändern, Schäumen zu reduzieren, Materialoberflächen, mit denen das Aramid verbunden oder verschweißt werden soll (siehe Beispiel 5). zu modifizieren oder anzulösen usw. Weiters folgt, dass Lösungsmittel der Gruppe II als Antisolvens geeignet sind um das gelöste Aramid wieder zum koagulieren und ausfällen zu bringen (siehe Beispiele 1 bis 3) bzw. bei geringerer Dosierung geeignet sind, die Lösekraft der ionischen Flüssigkeit herabzusetzen und auf einen gewünschten Wert einzustellen. Letzteres kann z.B. notwendig sein, um Aramidfasern mit sich selbst oder anderen Polymerfasern nur oberflächlich zu verschweißen, ohne die ganze Faser komplett aufzulösen oder die inneren Filamente der Faser miteinander zu verschweißen.

### Beispiel 5

60mg Technora® T-240 220 dtex Fasern wurden mit 2g trockenem 1-Butyl-3-methylimidazolium-acetat versetzt und für 3 Stunden verschlossen bei 80°C in den Trockenschrank gestellt, wobei ab und zu umgerührt wurde. Es entstand eine hochviskose, zähe Lösung. Diese Lösung wurde in eine 1 ml Kunststoffspritze ohne Kanüle aufgesaugt, mit einer feinen Kanüle versehen ("Insulinkanüle" 0,3x12 mm) und in ein Wasserbad gespritzt. Es bildete sich ein hellgelber Faden aus dem Aramid-Copolymer, welcher dem Bad entnommen werden konnte und welcher nach dem Trocknen die typische Farbe der ursprünglichen Fasern zeigte.

Eine Lösung 3mg von Kevlar®-K29 in 1g eines Lösungsmittels bestehend aus Tetrabutylammonium-hydroxid / DMSO 1:1 wurde hergestellt. Das Lösungsmittel wurde durch Mischen einer 40%igen wässrigen Lösung von Tetrabutylammonium-hydroxid und Dimethylsulfoxid im Massenverhältnis 1:1 (bezogen auf das in der 40%igen wässrigen Lösung enthaltene reine Tetrabutylammonium-hydroxid) und Entfernen des Wassers *in vacuo* bei 70°C und fallendem Druck bis auf 20mbar erzeugt. Dabei war das Aramid bereits zugegeben und löste sich auf. Nach dem Auflösen des Aramids zeigten sich 2 Phasen: Eine rot gefärbte, viskose Phase, welche das gelöste Aramid enthielt und eine farblose, niederviskose Phase, welche vermutlich aus einem Überschuss an DMSO bestand. Die rot gefärbte, viskose Phase wurde in eine Spritze gezogen. Durch Einspritzen in ein Wasserbad konnte das gelöste Kevlar® K29 koaguliert werden und es entstand ein charakteristisch gefärbter Faden, welcher nach 2 Stunden Wartezeit entnommen werden konnte und bei 90°C im Trockenschrank thermisch nachbehandelt wurde.

### Beispiel 6

4 Stück ca. 3 cm lange und ca. 1 mm dicke Technora® T-240 220 dtex Fäden (gesponnene Fasern des para-Aramid-Copolymer) wurden ca. 10 Sekunden in trockenes 1-Butyl-3-methylimidazolium-acetat bis zur vollständigen Benetzung getaucht und die überschüssige ionische Flüssigkeit durch Abwischen mit Zellstoff entfernt. Die so vorbereiteten Fäden wurden rasch (die ionische Flüssigkeit ist hygroskopisch und Wasser wirkt als Antisolvens) in Form eines Quadrats und an den Ecken überkreuzend auf einen Objektträger gelegt und ein zweiter Objektträger wurde darüber gelegt. Die beiden Objektträger wurden an den Enden mit Metallklammern zusammengehalten, sodass ein konstanter Druck auf die sich überkreuzenden und mit ionischer Flüssigkeit benetzten Fäden ausgeübt wurde.

Der Versuchsaufbau wurde für eine Stunde bei 80°C in den Trockenschrank gegeben und sodann in ein Becherglas mit Wasser getaucht, wobei die Klammern noch nicht entfernt wurden. Durch wiederholtes Eintauchen, Stehenlassen für 5 Minuten und wieder Herausheben wurde die zwischen den Objektträgern befindliche ionische Flüssigkeit von den Fasern heruntergewaschen. Die Klammern wurden entfernt und es konnte ein mechanisch stabiles Quadrat aus den Fäden entnommen werden.

Unter dem Mikroskop zeigte sich, dass ein im Bildteil befindlicher, unbehandelter Faden aus vielen einzelnen, klar unterscheidbaren Fasern besteht. Im Gegensatz dazu waren die einzelnen Fasern der behandelten Fäden miteinander verschmolzen und die Stelle der Überkreuzung miteinander verschweißt, was an dem kurvenförmigen Übergang zwischen dem horizontalen und dem vertikalen Faden deutlich zu erkennen war.

### Beispiel 7

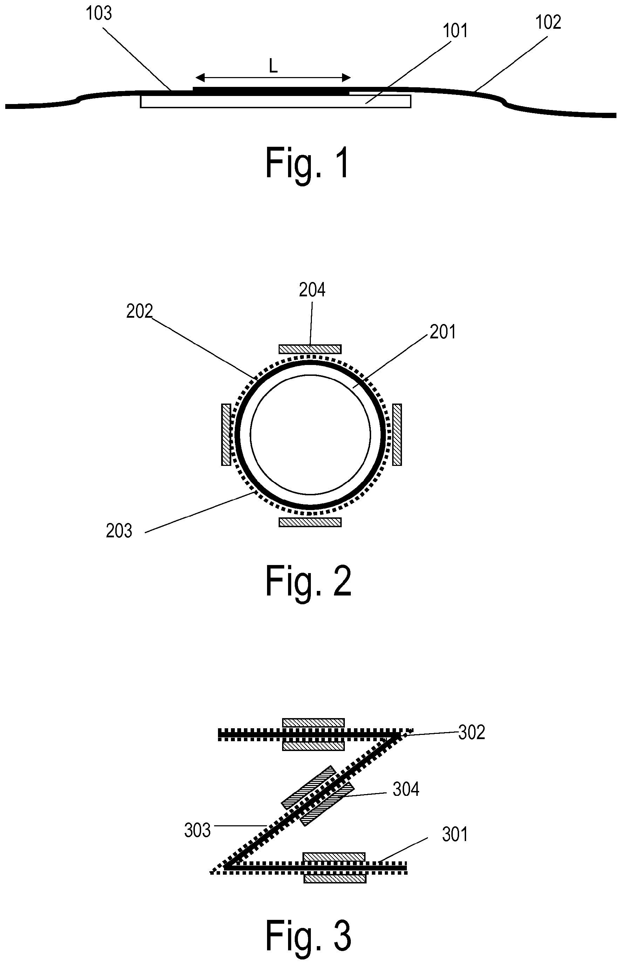

Zwei ca. 50cm lange Stücke eines ca. 2 mm breiten Nomex® 1780 dtex Garns (ein meta-Aramid) wurden jeweils an einem Ende über einer Länge von 5cm mittels eines gewöhnlichen 1cm breiten Borstenpinsels mit der ionischen Flüssigkeit 1-Ethyl-3-methylimidazolium-acetat (EMIM-OAc, CAS 143314-17-4; Gehalt HPLC >98%w, Wasser <1%w) bis zur Durchtränkung bestrichen. Wie in Figur 1 dargestellt, wurden die so behandelten Enden der Fäden 102 und 103 nun auf einem gewöhnlichen Objektträger 101 aus Glas mittels einer Pinzette exakt überlappend übereinander gelegt. Die Länge L des Überlappungsbereichs betrug 5cm. Mittels Zellstoff wurde überschüssige ionische Flüssigkeit entfernt, wobei darauf geachtet wurde, dass die beiden Garnenden ihre überlappende Position nicht veränderten.

Der so vorbereitete Objektträger wurde nun für 1 Stunde bei T = 90°C in einem Trockenschrank erhitzt. Der Objektträger mit den Garnstücken wurde nun dem Trockenschrank entnommen, etwas abgekühlt und entlang der Garnstücke vorsichtig mit einem Zerstäuber mit destilliertem Wasser besprüht, wobei das in der ionischen Flüssigkeit gelierte meta-Aramid durch Aufnahme von Wasser begann zu koagulieren. Der Objektträger samt Garnstücken wurde nun 2 Stunden in Wasser bei 50°C gespült (Becherglas mit Magnetrührer), um letzte Reste der ionischen Flüssigkeit EMIM-OAc zu entfernen. Die verschweißten Garnstücke wurden nun zur thermischen Nachbehandlung für 2h bei 105°C in den Trockenschrank gelegt.

Während des Erhitzen wurde das Nomex® Garn optisch durchscheinend und nach dem koagulieren durch Wasser als Antisolvens entstand wieder einen weißen Feststoff derselben Farbe wie das ursprüngliche Nomex® Garn. Die Nachbehandlung im Trockenschrank führte dazu, dass die verschweißte Stelle haptisch deutlich fühlbar an Härte zunahm.

### Beispiel 8

Analog zu Beispiel 7 wurden nun je 5 Stück verschweißte Nomex® 1780 dtex Garne hergestellt, wobei drei Varianten a.) -c.) sich wie folgt untescheiden:
a.) Verwendung von unverdünntem EMIM-OAc, Überlappung 5cm (s. Beispiel 6)
b.) Verwendung einer nur 20%igen wässrigen Lösung von EMIM-OAc (Auftrag einer geringeren Menge), Überlappung 5cm; hier wurde nach 45min Erhitzen auf T = 90°C ein zweiter Objektträger aufgebracht und mittels einer Metallklammer Druck auf die beiden Objektträger und dem darin befindlichen Nomex® Garn ausgeübt, um einen guten mechanischen Kontakt zwischen den beiden behandelten Garnenden zu gewährleisten. Es wurde sodann weitere 15min auf T = 90°C erhitzt, schließlich der gesamte Aufbau für eine Stunde in warmem Wasser bei 50°C gespült (Becherglas mit Magnetrührer), der Aufbau auseinandergenommen und die verschweißten Garne weiter behandelt wie in Beispiel 6 beschrieben (Spülen 2h bei 50°C, thermisches Nachbehandeln 2h 105°C)
c.) Verwendung von unverdünntem EMIM-OAc, Überlappungslänge L allerdings nur 1cm

Zur Abschätzung der Zugfestigkeiten der Garnproben wurde wie folgt vorgegangen:
Ein 20kg schweres Gewicht bestehend aus einem mit Wasser gefüllten Kanister geeigneter Größe wurde auf eine Oberschalenwaage aufgelegt, wobei die Waage einem Meßbereich von max. 60kg und einer Genauigkeit von d = 10g hatte. Die Anzeige wurde mit dem Gewicht auf 0,00kg tariert. Das zu prüfende Nomex-Garn wurde mittels Knoten am Griff des Kanisters und am anderen Ende an einem Metallstab (Länge = 20cm, Durchmesser 1cm) befestigt. Durch langsames Anheben des Metallstabes wurden die Garne bis zum Bruch belastet, wobei die Anzeige der Oberschalenwaage nun durch Entlastung einen negativen Wert anzeigte. Der dem Betrag nach maximale Wert entsprach der Zugfestigkeit (Bruchlast) in kg, welche multipliziert mit der mittleren Erdbeschleunigung von 9,81 m·s⁻² dann die abgeschätzte Zugfestigkeit in Newton ergab. Es wurden folgende Werte und Standardabweichungen gefunden:
- Unbehandeltes Garn (Referenz): Fₘₐₓ = 60,8 ± 2,4 N
- Beispiel 7a: Fₘₐₓ = 50,0 ± 4,8 N (82% der Referenz)
- Beispiel 7b: Fₘₐₓ = 47,1 ± 5,9 N (77% der Referenz)
- Beispiel 7c: Fₘₐₓ = 31,4 ± 5,0 N (52% der Referenz)

Es konnte gezeigt werden, dass bereits in den vorliegenden, suboptimalen Prinzipversuchen Zugfestigkeiten nahe der Zugfestigkeit des unbehandelten Nomex® 1780 dtex Garns erreicht werden konnten.

### Beispiel 9

Analog zu Beispiel 7 wurden zwei ca. 50cm lange Stücke eines ca. 2 mm breiten, gesponnenen Nomex® 1780 dtex Garns (ein meta-Aramid) über eine Länge von 5cm miteinander verschweißt. Im Unterschied zu Beispiel 7 wurde jedoch nach der ersten thermischen Behandlung von einer Stunde bei 90°C das Aramid nicht mittels Zugabe von Wasser koaguliert, sondern der Schritt c) durch in einer alternativen Variante ausgeführt. Bei der eingesetzten ionischen Flüssigkeit EMIM-OAc handelt es sich um eine Verbindung die in einem chemischen Gleichgewicht mit neutralen, nicht ionischen Verbindungen stehen, und sich wie in WO2009027250 der BASF SE beschrieben abdestillieren lässt. Zum Entfernen wurde das mittels EMIM-OAc angelöste Garn wurde samt Objektträger für eine Dauer von 2 Stunden in einem Vakuumtrockenschrank einer Temperatur von 150°C und einem Druck von 0,05mbar ausgesetzt. Nach der Behandlung unter Vakuum war daher die ionische Flüssigkeit über neutrale, verdampfbare molekularen Verbindungen entfernt worden und die beiden Nomex® 1780 dtex Garne lagen verschweißt vor.

### Beispiel 10

Je zwei ca. 50cm lange Stücke eines ca. 2 mm breiten, gesponnenen Nomex® 1780 dtex Garns (ein meta-Aramid) wurden über eine Länge von 1cm mit der ionischen Flüssigkeit 1-Hexyl-3-methylimidazolium-chlorid, CAS 171058-17-6 (Gehalt HPLC >98%w, Wasser <1%w) bestrichen und ansonsten analog zu Beispiel 7 behandelt. Es wurde ein fest verschweißtes Garn erhalten.

### Beispiel 11

Je zwei ca. 50cm lange Stücke eines ca. 2 mm breiten, gesponnenen Nomex® 1780 dtex Garns (ein meta-Aramid) wurden über eine Länge von 1cm mit der ionischen Flüssigkeit Tributylmethylammonium-acetat, CAS 131242-39-2 (Gehalt HPLC >98%w, Wasser <1%w) bestrichen und ansonsten analog zu Beispiel 7 behandelt. Es wurde ein fest verschweißtes Garn erhalten.

### Beispiel 12

Je zwei ca. 50cm lange Stücke eines ca. 2 mm breiten, gesponnenen Technora® T-240 220 dtex Garns (ein para-Aramid Copolymer) wurden über eine Länge von 1cm mit der ionischen Flüssigkeit Tributylmethylammonium-acetat, CAS 131242-39-2 (Gehalt HPLC >98%w, Wasser <1%w) bestrichen und ansonsten analog zu Beispiel 7 behandelt. Es wurde ein fest verschweißtes Garn erhalten.

### Beispiel 13

Je zwei ca. 50cm lange Stücke eines ca. 2 mm breiten, gesponnenen Technora® T-240 220 dtex, Garns wurden analog zu Beispiel 7 behandelt. Es wurde ein fest verschweißtes Garn erhalten.

### Beispiel 14

Je zwei ca. 50cm lange Stücke eines ca. 2 mm breiten, gesponnenen Kevlar® K29 Garns (ein para-Aramid) wurden über eine Länge von 1cm mit der formulierten ionischen Flüssigkeit 1-Ethyl-3-methylimidazolium-fluorid (CAS 133928-43-5) / DMSO 1:1 (Reinheit ionische Flüssigkeit HPLC >98% rel.Fläche, Wasser 13.1%w) bestrichen und ansonsten analog zu Beispiel 7 behandelt. Es wurde ein fest verschweißtes Garn erhalten.

### Beispiel 15

Je zwei ca. 50cm lange Stücke eines ca. 2 mm breiten, gesponnenen Kevlar® K29 Garns (ein para-Aramid) wurden über eine Länge von 1cm mit der formulierten ionischen Flüssigkeit Tetrabutylammonium-fluoride hydrate (22206-57-1) / DMSO 1:1 (Reinheit ionische Flüssigkeit HPLC >98% rel.Fläche, Wasser 5,2%w) bestrichen und ansonsten analog zu Beispiel 7 behandelt. Es wurde ein fest verschweißtes Garn erhalten.

### Beispiel 16

Ein ca. 5cm x 3cm großes Stück eines Gewebes (m = 0,573g) aus ca. 2mm breitem, gesponnenen Nomex® 1780 dtex Garn (ein meta-Aramid) wurde mittels eines gewöhnlichen 1cm breiten Borstenpinsels mit der ionischen Flüssigkeit 1-Ethyl-3-methylimidazolium-acetat (EMIM-OAc, CAS 143314-17-4; Gehalt HPLC >98%w, Wasser <1%w) bis zur Durchtränkung bestrichen. Der Überschuß an EMIM-OAc wurde mittels Betupfen mit Zellstoff entfernt; durch erneutes Auswägen wurde die Menge der so aufgetragenen ionischen Flüssigkeit mit m = 2,122g bestimmt. In Figur 2 ist gezeigt, wie das so behandelte Gewebe 202 auf einen formgebenden Stützkörper 201 angeordnet wurde. Der Körper war ein Glasrohr mit einem Durchmesser von 15mm, welches zuvor mit einer hauchdünnen Schicht eines handelsüblichen Silikonöls als Trennmittel (Lauda Ultra 350) bestrichen wurde. Um das Gewebe 202 wurde ein Gitter 203 angeordnet. Wofür ein ca. 6cm x 6cm großes Stück eines handelsüblichen, mechanisch starren Aluminiumgitters mit ca. 2mm Maschenweite und ca. 1mm Dicke in eine zylinderförmige, an einer Seite offene Form mit ca. 20mm Durchmesser gebogen wurde. Innen mit einer hauchdünnen Schicht des Silikonöls bestrichen, wurde dass Gitter 203 über den Stützkörper 201 mit dem Nomex® Gewebe 202 geschoben. Durch Anbringen von Klammern 204 wie in Figur 2 durch die angedeutet, wurde nun Druck auf die Form aufgebracht, sodaß der Zylinder aus Aluminiumgitter 203 seinen Durchmesser verkleinerte, bündig gegen das starre Glasrohr 201 gepresst wurde und sich der Druck infolge auf das mit EMIM-OAc behandelte Nomex® 1780 dtex Gewebe 202 übertrug.

Die so vorbereitete Anordnung wurde nun für 2 Stunden bei T = 90°C in einem Trockenschrank erhitzt, wobei sich das Nomex® Gewebe in eine sehr zähe, gelförmige Masse verwandelte. Die Form wurde nun 10 Minuten über siedendem Wasser mit Wasserdampf behandelt, wobei das in der ionischen Flüssigkeit gelierte meta-Aramid begann durch Aufnahme von Wasser zu koagulieren. Die gelförmige Masse wurde wieder zum Feststoff derselben Farbe wie das ursprüngliche Nomex® Gewebe. Die Form wurde nun 2 Stunden in Wasser bei 50°C gespült (Becherglas mit Magnetrührer), um letzte Reste der ionischen Flüssigkeit EMIM-OAc zu entfernen. Nach Entfernen der Metallklammern 204 und des Aluminium-Gitters 203 konnte das verschweißte Aramid als elastischer, formstabiler, zylinderförmiger Hohlkörper entnommen werden, welcher an seiner Außenseite das Negativmuster des Aluminium-Gitters zeigte und auf seiner Innenseite glatt war. Dieser Hohlkörper wurde nun 2 Stunden bei 105°C im Trockenschrank thermisch nachbehandelt. Es wurde nun ein harter, formstabiler Hohlkörper aus Nomex®1780 dtex der Masse m = 0,550g erhalten.

### Beispiel 17

Ein ca. 3,5cm x 5cm großes Stück eines Gewebes (m = 0,414g) aus ca. 2mm breitem, gesponnen Nomex®1780 dtex Garn wurde mittels eines gewöhnlichen 1cm breiten Borstenpinsels mit der ionischen Flüssigkeit 1-Ethyl-3-methylimidazolium-acetat (EMIM-OAc, CAS 143314-17-4; Gehalt HPLC >98%w, Wasser <1%w) bis zur Durchtränkung bestrichen. Der Überschuß an EMIM-OAc wurde mittels Betupfen mit Zellstoff entfernt; durch erneutes Auswägen wurde die Menge der so aufgetragenen ionischen Flüssigkeit mit m = 2,497g bestimmt. Zur Ausbildung eines Z-förmigen dreidimensionalen Formkörper wurde eine Anordnung gemäß Figur 3 vorbereitet. Das so behandelte Gewebe 302 wurde dafür zwischen einem ersten Stützgitter 301 und einem zweitem Stützgitter 303 gelegt. Bei den Stützgittern handelte es sich um zwei ca. 6cm x 6cm große Stücke eines handelsüblichen, mechanisch starren Aluminiumgitters mit ca. 2mm Maschenweite und ca. 1mm Dicke gelegt, welche zuvor mit einer hauchdünnen Schicht des in Beispiel 16 beschriebenen Silikonöls als Trennmittel bestrichen worden waren. Wie in Figur 3 gezeigt, wurden dann die beiden Aluminiumgitter 301 und 302 mit dem darin befindlichen, mit EMIM-OAc behandeltem Nomex®1780 dtex Gewebe 301 in eine Z-Form gebogen und mit Metallklammern 304 zusammengepresst, sodass sich der Druck auf das Nomex® Gewebe übertrug.

Die so vorbereitete Anordnung wurde nun für 2 Stunden bei T = 90°C in einem Trockenschrank erhitzt, wobei sich das Nomex® Gewebe in eine sehr zähe, gelförmige Masse verwandelte. Die Form wurde nun 10 Minuten über siedendem Wasser mit Wasserdampf behandelt, wobei das in der ionischen Flüssigkeit gelierte meta-Aramid durch Aufnahme von Wasser begann zu koagulieren und sich die gelförmige Masse in einen weißen Feststoff derselben Farbe wie das ursprüngliche Nomex® Gewebe verwandelte. Die Form wurde nun 2 Stunden in Wasser bei 50°C gespült (Becherglas mit Magnetrührer), um letzte Reste der ionischen Flüssigkeit EMIM-OAc zu entfernen. Nach Entfernen der Metallklammern und der Aluminium-Gitter konnte ein elastischer, formstabiler, Z-förmiger Formkörper entnommen werden, welcher an seinen Außenseiten das Negativmuster der Aluminium-Gitter zeigte. Dieser Formkörper wurde nun 2 Stunden bei 105°C im Trockenschrank thermisch nachbehandelt. Es wurde nun ein harter, stabiler Z-förmiger Formkörper aus Nomex®1780 dtex der Masse m = 0,397g erhalten.

## Patentansprüche

1. Verfahren zum Verschweißen von Aramidfasern, **dadurch gekennzeichnet, dass**
a) mindestens ein Bereich einer Aramidfaser mit einer ionischen Flüssigkeit behandelt wird, sodass das Aramid angelöst wird,
b) die Aramidfaser über den angelösten Bereich mit einem weiteren Aramidfaserbereich in Kontakt gebracht wird, wobei optional Druck auf den Kontaktbereich ausgeübt wird, wobei bevorzugt der weitere Aramidfaserbereich ebenfalls gemäß Schritt a) angelöst ist, und anschließend,
c) der angelöste Bereich des Aramids wieder koaguliert wird,
wobei die ionische Flüssigkeit zumindest eines der beiden folgenden Kriterien aufweist:
i) α-Wert < 0,6 und β-Wert > 0,8 oder
ii) Differenz aus β-Wert minus α-Wert ≥ 0,45,
wobei α-Wert und β-Wert Kamlet-Taft Solvent-Parameter sind.

2. Verfahren nach Anspruch 1, **dadurch gekennzeichnet, dass** die Aramidfasern ausgewählt sind aus der Gruppe umfassend meta-Aramid und para-Aramid-Copolymer.

3. Verfahren nach Anspruch 2, **dadurch gekennzeichnet, dass** die ionische Flüssigkeit ein Salz umfasst,
wobei das Kation ausgewählt ist aus einem quaternären Ammonium, Phosphonium, Guanidinium, Pyridinium, Pyrimidinium, Pyridazinium, Pyrazinium, Piperidinium, Morpholinium, Piperazinium, Pyrrolium, Pyrrolidinium, Oxazolium, Thiazolium, Triazinium, Imidazolium, Triazolium, protoniertem Guanidinium und das Anion ausgewählt ist aus
- Halogenid, ausgewählt aus der Gruppe umfassend F⁻, Cl⁻, Br⁻
- Carboxylat der allgemeinen Formel
[Rₙ-COO]⁻ .... (Vd)
worin Rₙ Wasserstoff, (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5- bis 6-gliedriges Aryl oder 5- bis 6-gliedriges Heteroaryl bedeutet,
- Carbonat,
- Alkylcarbonat, der allgemeinen Formel
[Rₛ-OCOO]⁻ .... (Vf)
worin Rₛ (C₁₋₄)Alkyl ist, insbesondere Methylcarbonat und Ethylcarbonat
- Hydroxid,
- Alkoxid oder Aryloxid, der allgemeinen Formel
[Rₘ-O]⁻ .... (Ve)
worin Rₘ (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5- bis 6-gliedriges Aryl oder 5- bis 6-gliedriges Heteroaryl bedeutet,
- Phosphat PO₄³⁻,
- Alkyl- oder Dialkylphosphat, oder Alkyl- und Dialkylphosphonat, der allgemeinen Formeln
[Rᵤ-OPO₃]²⁻ (Vi)
[RᵤO-PO₂-ORᵥ]⁻ (Vj)
[Rᵤ-PO₃]²⁻ (Vk)
oder
[Rᵤ-PO₂-ORᵥ]⁻ (Vl),
worin Rᵤ und Rᵥ unabhängig voneinander (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5- bis 6-gliedriges Aryl oder 5- bis 6-gliedriges Heteroaryl bedeuten.

4. Verfahren nach Anspruch 1, **dadurch gekennzeichnet, dass** die Aramidfasern para-Aramid sind.

5. Verfahren nach Anspruch 4, **dadurch gekennzeichnet, dass** die ionische Flüssigkeit ein Salz umfasst,
wobei das Kation ausgewählt ist aus einem quaternären Ammonium, Phosphonium, Guanidinium, Pyridinium, Pyrimidinium, Pyridazinium, Pyrazinium, Piperidinium, Morpholinium, Piperazinium, Pyrrolium, Pyrrolidinium, Oxazolium, Thiazolium, Triazinium, Imidazolium, Triazolium, protoniertem Guanidinium und das Anion ausgewählt ist aus
- Fluorid
- Hydroxid,
- Alkoxid oder Aryloxid, der allgemeinen Formel
[Rₘ₋O]⁻ .... (Ve)
worin Rₘ (C₁₋₁₀)Alkyl, (C₃₋₁₀)Cycloalkyl, (C₂₋₁₀)Alkenyl, (C₃₋₁₀)Cycloalkenyl, Aryl oder Heteroaryl, bevorzugt (C₁₋₈)Alkyl, (C₃₋₈)Cycloalkyl, (C₂₋₈)Alkenyl, (C₃₋₈)Cycloalkenyl, 5- bis 6-gliedriges Aryl oder 5- bis 6-gliedriges Heteroaryl bedeutet.

6. Verfahren nach einem der Ansprüche 1 bis 5, **dadurch gekennzeichnet, dass** der angelöste Bereich des Aramids wieder koaguliert wird, indem
i) das Aramid durch Zugabe eines Antisolvens ausgefällt wird, oder
ii) die ionische Flüssigkeit entfernt wird, indem auf eine Temperatur oberhalb des thermischen Zersetzungspunkts der ionischen Flüssigkeit, aber unterhalb des thermischen Zersetzungspunkts des Aramids erhitzt wird, wobei die ionische Flüssigkeit in Form gasförmiger Zersetzungsprodukte entfernt wird; oder unter ihren thermischen Zersetzungspunkt, sofern die koordinierende ionische Flüssigkeit einen ausreichend hohen Dampfdruck besitzt um sie gegebenenfalls unter Vakuum abzudestillieren, oder
iii) die ionische Flüssigkeit polymerisiert wird, oder
iv) eine Kombination daraus.

7. Verschweißte Aramidfasern erhältlich nach einem Verfahren nach einem der Ansprüche 1 bis 6.

8. Formkörper aus verschweißten Aramidfasern erhältlich nach einem Verfahren nach einem der Ansprüche 1 bis 6.

9. Fördergurt umfassend eine Karkasse **dadurch gekennzeichnet, dass** die Karkasse einen Formkörper aus verschweißtem Aramid erhältlich nach einem Verfahren nach einem der Ansprüche 1 bis 6 umfasst.

## Claims

1. A method for welding aramid fibers, **characterized in that**
a) at least one region of an aramid fiber is treated with an ionic liquid so that the aramid is partially dissolved,
b) the aramid fiber is contacted via the partially dissolved region with another aramid fiber region, optionally while pressure is applied to the contact region, wherein preferably the further aramid fiber region has also been partially dissolved according to step a), and subsequently
c) the partially dissolved region of the aramid is re-coagulated,
wherein the ionic liquid meets at least one of the following two criteria:
i) α value < 0.6 and β value > 0.8, or
ii) difference of β value minus α value ≥ 0.45,
wherein the α value and β value are Kamlet-Taft solvent parameters.

2. The method according to claim 1, **characterized in that** the aramid fibers are selected from the group comprising meta-aramid and copolymer of para-aramid.

3. The method according to claim 2, **characterized in that** the ionic liquid comprises a salt,
wherein the cation is selected from a quaternary ammonium, phosphonium, guanidinium, pyridinium, pyrimidinium, pyridazinium, pyrazinium, piperidinium, morpholinium, piperazinium, pyrrolium, pyrrolidinium, oxazolium, thiazolium, triazinium, imidazolium, triazolium, protonated guanidinium,
and the anion is selected from
- halide, selected from the group comprising F⁻, Cl⁻, Br⁻
- carboxylate of the general formula
[Rₙ-COO]⁻ .... (Vd)
wherein Rₙ represents hydrogen, (C₁-₁₀)alkyl, (C₃₋₁₀)cycloalkyl, (C₂₋₁₀)alkenyl, (C₃- ₁₀)cycloalkenyl, aryl, or heteroaryl, preferably (C₁₋₈)alkyl, (C₃₋₈)cycloalkyl, (C₂₋₈)alkenyl, (C₃₋₈)cycloalkenyl, 5- to 6-membered aryl, or 5- to 6-membered heteroaryl,
- carbonate,
- alkylcarbonate of the general formula
[Rₛ-OCOO]⁻ .... (Vf)
wherein Rₛ is (C₁₋₄)alkyl, in particular methyl carbonate and ethyl carbonate
- hydroxide,
- alkoxide or aryloxide of the general formula
[Rₘ-O]⁻ (Ve)
wherein Rₘ represents (C₁-₁₀)alkyl, (C₃₋₁₀)cycloalkyl, (C₂₋₁₀)alkenyl, (C₃₋₁₀)cycloalkenyl, aryl, or heteroaryl, preferably (C₁₋₈)alkyl, (C₃₋₈)cycloalkyl, (C₂₋₈)alkenyl, (C₃₋₈)cycloalkenyl, 5- to 6-membered aryl, or 5- to 6-membered heteroaryl,
- phosphate PO₄³⁻,
- alkyl or dialkyl phosphate, or alkyl and dialkyl phosphonate of the general formulas
[Rᵤ-OPO₃]²⁻ (Vi)
[RᵤO-PO₂-ORᵥ]⁻ (Vj)
[Rᵤ-PO₃]²⁻ (Vk)
or
[Rᵤ-PO₂-ORᵥ]⁻ (Vl),
wherein Rᵤ and Rᵥ independently represent (C₁-₁₀)alkyl, (C₃₋₁₀)cycloalkyl, (C₂₋₁₀)alkenyl, (C₃₋₁₀)cycloalkenyl, aryl, or heteroaryl, preferably (C₁₋₈)alkyl, (C₃₋₈)cycloalkyl, (C₂₋₈)alkenyl, (C₃₋₈)cycloalkenyl, 5- to 6-membered aryl, or 5- to 6-membered heteroaryl.

4. The method according to claim 1, **characterized in that** the aramid fibers are para-aramid.

5. The method according to claim 4, **characterized in that** the ionic liquid comprises a salt,
wherein the cation is selected from a quaternary ammonium, phosphonium, guanidinium, pyridinium, pyrimidinium, pyridazinium, pyrazinium, piperidinium, morpholinium, piperazinium, pyrrolium, pyrrolidinium, oxazolium, thiazolium, triazinium, imidazolium, triazolium, protonated guanidinium,
and the anion is selected from
- fluoride,
- hydroxide,
- alkoxide or aryloxide of the general formula
[Rₘ-O]⁻ (Ve)
wherein Rₘ represents (C₁-₁₀)alkyl, (C₃₋₁₀)cycloalkyl, (C₂₋₁₀)alkenyl, (C₃₋₁₀)cycloalkenyl, aryl, or heteroaryl, preferably (C₁₋₈)alkyl, (C₃₋₈)cycloalkyl, (C₂₋₈)alkenyl, (C₃₋₈)cycloalkenyl, 5- to 6-membered aryl, or 5- to 6-membered heteroaryl.

6. The method according to any one of the claims 1 to 5, **characterized in that** the partially dissolved region of the aramid is re-coagulated by
i) precipitating the aramid by adding an anti-solvent, or
ii) removing the ionic liquid by heating to a temperature above the thermal decomposition point of the ionic liquid, but below the thermal decomposition point of the aramid, wherein the ionic liquid is removed in the form of gaseous decomposition products; or below its thermal decomposition point, as long as the coordinating ionic liquid has a vapor pressure sufficiently high to allow distilling it off optionally in vacuum, or
iii) polymerizing the ionic liquid, or
iv) a combination thereof.

7. Welded aramid fibers obtainable according to a method according to any one of the claims 1 to 6.

8. Shaped body of welded aramid fibers obtainable according to a method according to any one of the claims 1 to 6.

9. Conveyor belt comprising a carcass, **characterized in that** the carcass comprises a shaped body of welded aramid obtainable according to a method according to any one of the claims 1 to 6.

## Revendications

1. Procédé de soudage de fibres d'aramide, **caractérisé en ce que**
a) on traite au moins une région d'une fibre d'aramide avec un liquide ionique, de sorte que l'aramide soit partiellement dissous,
b) on met la fibre d'aramide en contact par la région partiellement dissous avec une autre région de fibre d'aramide, dans lequel on applique en option un pression sur la région de contact, dans lequel l'autre région de fibre d'aramide est de préférence également partiellement dissous selon l'étape a), et ensuite
c) on coagule de nouveau la région de l'aramide partiellement dissous,
dans lequel le liquide ionique présente au moins l'un des deux critères suivants:
i) valeur α < 0,6 et valeur β > 0,8 ou
ii) différence de valeur β moins valeur α ≥ 0,45,
dans lequel la valeur α et la valeur β sont des paramètres de solvant de Kamlet- Taft.

2. Procédé selon la revendication 1, **caractérisé en ce que** les fibres d'aramide sont sélectionnées dans le groupe comprenant le méta-aramide et un copolymère para-aramide.

3. Procédé selon la revendication 2, **caractérisé en ce que** le liquide ionique comprend un sel,
dans lequel le cation est sélectionné parmi un ammonium, phosphonium, guanidinium, pyridinium, pyrimidinium, pyridazinium, pyrazinium, piperidinium, morpholinium, piperazinium, pyrrolium, pyrrolidinium, oxazolium, thiazolium, triazinium, imidazolium, triazolium quaternaire et guanidinium protonisé,
et l'anion est sélectionné parmi un
- halogénure, choisi dans le groupe comprenant F⁻, Cl⁻, Br⁻
- carboxylate de la formule générale
[Rn⁻COO]⁻ ... (Vd)
dans laquelle Rₙ représente un hydrogène, alkyle (C₁₋₁₀), cycloalkyle (C₃₋₁₀), alcényle (C₂₋₁₀), cycloalcényle (C₃₋₁₀), aryle ou hétéroaryle, de préférence alkyle (C₁₋₈), cycloalkyle (C₃₋₈), alcényle (C₂₋₈), cycloalcényle (C₃₋₈), aryle à 5 à 6 chaînons ou hétéroaryle à 5 à 6 chaînons,
- carbonate,
- carbonate d'alkyle, de la formule générale
[Rₛ-OCOO]⁻ ... (Vf)
dans laquelle Rₛ est alkyle (C₁₋₄), en particulier carbonate de méthyle ou carbonate d'éthyle
- hydroxyde,
- alcoxyde ou aryloxyde, de la formule générale
[Rₘ-O]⁻ ... (Ve)
dans laquelle Rm représente alkyle (C₁₋₁₀), cycloalkyle (C₃₋₁₀), alcényle (C₂₋₁₀), cycloalcényle (C₃₋₁₀), aryle ou hétéroaryle, de préférence alkyle (C₁₋₈), cycloalkyle (C₃₋₈), alcényle (C₂₋₈), cycloalcényle (C₃₋₈), aryle à 5 à 6 chaînons ou hétéroaryle à 5 à 6 chaînons,
- phosphate PO₄³⁻,
- phosphate d'alkyle ou de dialkyle, ou phosphonate d'alkyle ou de dialkyle, des formules générales
[Rᵤ-OPO₃]²⁻ (Vi)
[Rᵤ-O-PO₂-ORᵥ]⁻ (Vj)
[Rᵤ-PO₃]²⁻ (Vk)
ou
[Rᵤ-PO₂-ORᵥ]⁻ (Vl),
dans lesquelles Rᵤ et Rᵥ représentent, indépendamment l'un de l'autre, alkyle (C_{1-10),} cycloalkyle (C₃₋₁₀), alcényle (C₂₋₁₀), cycloalcényle (C₃₋₁₀), aryle ou hétéroaryle, de préférence alkyle (C₁₋₈), cycloalkyle (C₃₋₈), alcényle (C₂₋₈), cycloalcényle (C₃₋₈), aryle à 5 à 6 chaînons ou hétéroaryle à 5 à 6 chaînons.

4. Procédé selon la revendication 1, **caractérisé en ce que** les fibres d'aramide sont du para-aramide.

5. Procédé selon la revendication 4, **caractérisé en ce que** le liquide ionique comprend un sel
dans lequel le cation est sélectionné parmi un ammonium quaternaire, phosphonium, guanidinium, pyridinium, pyrimidinium, pyridazinium, pyrazinium, piperidinium, morpholinium, piperazinium, pyrrolium, pyrrolidinium, oxazolium, thiazolium, triazinium, imidazolium, triazolium, guanidinium protonisé,
et l'anion est sélectionné parmi un
- fluorure,
- hydroxyde,
- alcoxyde ou aryloxyde, de la formule générale
[Rₘ₋O]⁻ ... (Ve)
dans laquelle Rₘ représente alkyle (C₁₋₁₀), cycloalkyle (C₃₋₁₀), alcényle (C₂₋₁₀), cycloalcényle (C₃₋₁₀), aryle ou hétéroaryle, de préférence alkyle (C₁₋₈), cycloalkyle (C₃₋₈), alcényle (C₂₋₈), cycloalcényle (C₃₋₈), aryle à 5 à 6 chaînons ou hétéroaryle à 5 à 6 chaînons.

6. Procédé selon l'une quelconque des revendications 1 à 5, **caractérisé en ce que** l'on coagule de nouveau la région de l'aramide partiellement dissous, par le fait que
i) on précipite l'aramide par ajout d'un anti-solvant, ou
ii) on élimine le liquide ionique, par le fait qu'on le chauffe à une température supérieure au point de décomposition thermique du liquide ionique, mais inférieure au point de décomposition thermique de l'aramide, dans lequel on élimine le liquide ionique sous la forme de produits de décomposition gazeux ; ou en dessous de son point de décomposition thermique, dans la mesure où le liquide ionique de coordination possède une pression de vapeur suffisamment élevée pour le distiller éventuellement sous vide, ou
iii) on polymérise le liquide ionique, ou
iv) on utilise une combinaison de ces opérations.

7. Fibres d'aramide soudées pouvant être obtenues par un procédé selon l'une quelconque des revendications 1 à 6.

8. Corps moulé en fibres d'aramide soudées pouvant être obtenues par un procédé selon l'une quelconque des revendications 1 à 6.

9. Courroie transporteuse comprenant une carcasse, **caractérisée en ce que** la carcasse comprend un corps moulé en fibres d'aramide soudées pouvant être obtenues par un procédé selon l'une quelconque des revendications 1 à 6.
